(19) Europäisches Patentamt
European Patent Office
Office européen des brevets

(11) EP 3 122 861 B1

(12) **EUROPEAN PATENT SPECIFICATION**

(45) Date of publication and mention of the grant of the patent:
**08.05.2019 Bulletin 2019/19**

(21) Application number: **15716748.7**

(22) Date of filing: **19.03.2015**

(51) Int Cl.:
***C11D 3/386*** *(2006.01)*

(86) International application number:
**PCT/EP2015/055805**

(87) International publication number:
**WO 2015/144561 (01.10.2015 Gazette 2015/39)**

# (54) LIQUID DETERGENT COMPOSITIONS COMPRISING AN ALPHA-AMYLASE

FLÜSSIGE WASCHMITTELZUSAMMENSETZUNGEN MIT EINER ALPHA-AMYLASE

COMPOSITIONS DE DÉTERGENT LIQUIDE COMPRENANT UNE ALPHA-AMYLASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2014 EP 14161796**

(43) Date of publication of application:
**01.02.2017 Bulletin 2017/05**

(73) Proprietors:
- **Unilever N.V.**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**
- **Unilever PLC**
  **London, Greater London EC4Y 0DY (GB)**
  Designated Contracting States:
  **CY GB IE MT**

(72) Inventors:
- **MOLE, Vincent, Charles**
  **Bebington**
  **Merseyside CH63 3JW (GB)**
- **PRIIMOV, Gleb, Urevich**
  **Bebington**
  **Merseyside CH63 3JW (GB)**
- **RIGBY, Dawn**
  **Bebington**
  **Merseyside CH63 3JW (GB)**
- **SANDERSON, Alastair, Richard**
  **Bebington**
  **Merseyside CH63 3JW (GB)**

(74) Representative: **McHugh, Paul Edward**
**Unilever PLC**
**Unilever Patent Group**
**Colworth House**
**Sharnbrook**
**Bedford**
**Bedfordshire MK44 1LQ (GB)**

(56) References cited:
**WO-A1-2011/098531**
**WO-A2-2011/100410**
**WO-A2-2013/057143**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD OF INVENTION

The present invention relates to liquid detergent compositions comprising a surfactant system, a chelating agent and an alpha-amylase. More in particular, it relates to liquid detergent compositions comprising at least 5% water, at least 3 wt.% of a surfactant system comprising 10 to 100 wt.% anionic surfactant, 0.25 wt% of a chelating agent, wherein the chelating agent is HEDP or another chelating agent having equal or higher chelating capability than HEDP under identical conditions and an alpha-amylase having at least 95% sequence identity to SEQ ID NO:1 and said alpha-amylase comprising the substitutions G46A+T47I+G105A +1199F when using SEQ ID NO:1 for numbering.

### BACKGROUND OF THE INVENTION

Aqueous liquid detergent compositions comprising anionic surfactants such as alkylbenzene sulphonate (LAS) and an alpha-amylase are well known in the art. For example, US-A-4 537 706 (Severson) discloses several liquid detergent compositions comprising at least 5 wt.% of a surfactant system comprising linear alkylbenzene sulphonate (LAS) surfactant, sodium laurylethoxysulfate (SLES), non-ionic, fatty acid and an alpha-amylase.

Alpha-amylases (alpha-1,4-glucan-4-glucanohydrolases, E.C. 3.2.1.1) constitute a group of enzymes which catalyse the hydrolysis of starch and other linear and branched 1,4-glucosidic oligo- and polysaccharides. Among the first bacterial alpha-amylases to be used was an alpha-amylase from *B.licheniformis,* also known as Termamyl™, which has been extensively characterized and the crystal structure has been determined for this enzyme. Termamyl™ and many other highly efficient alpha-amylases require calcium for activity. For Termamyl™ it has been found that four calcium atoms are bound in the alpha-amylase structure coordinated by negatively charged amino acid residues. In other alpha-amylases the amount of calcium ions bound in the structure might be different. This requirement for calcium is a disadvantage in applications where strong chelating compounds are present, such as in detergents, whereas chelators are usually not added in other applications such as liquefaction of starch and production of biofuel.

The major problem encountered with such alpha-amylase containing liquid detergent compositions is that the storage stability of the enzymes in the detergent composition often leaves to be desired. It is particularly difficult to stabilize amylases in the presence of proteases, which can readily degrade amylases in aqueous liquid or gel detergent compositions. A further problem associated with such liquid detergent containing detergent compositions is that anionic surfactants, in particular alkylbenzene sulphonate (LAS), have a tendency to inactivate enzymes, for example the alpha-amylase enzyme.

For this reason, US-A-4 537 706 (Severson) employs an enzyme stabilizing system comprising a mixture of boric acid or an alkali metal borate with calcium ion, and preferably a polyol. Such enzyme stabilizing systems comprising a mixture of boric acid or an alkali metal borate with calcium ion, and preferably a polyol have the disadvantage that these ingredients per se do not contribute to the cleaning activity. Moreover, the requirement for calcium is a disadvantage in applications where strong chelating compounds are present, such as in detergents and cleaning compositions. The addition of calcium to a liquid detergent may also present problems with the formulation, i.e. the physical stability of the detergent. Boron is less preferred for environmental reasons.

More recently, alpha-amylases have been developed which are more stable in the presence of chelating agents. For example WO-A-2011/100410 (Procter&Gamble) discloses cleaning compositions comprising variants of an alpha-amylase SP722 obtainable from any of the Bacillus strains NCIB 12289, NCIB 12512, NCIB 12513 and DSM 9375. Some of these alpha amylases variants exhibit good storage stability at pH 8.2 in the presence of anionic surfactants and chelating agents.

WO-A-2011/082429 (Novozymes) discloses a vast number of further alpha-amylase variants with reduced calcium sensitivity comprising an A-domain of a calcium-sensitive alpha-amylase, a B-domain of a calcium-insensitive alpha-amylase, and a C-domain of a calcium-sensitive alpha-amylase. These variants are said to be useful for a variety of applications namely in starch processing (e.g., liquefaction); wet milling processes; alcohol production from carbohydrate sources; detergents; dishwashing compositions; starch desizing in the textile industry; baking applications; the beverage industry; oil fields in drilling processes; recycling processes, e.g., for de-inking paper, and animal feed.

Since the conditions are quite different in these various applications of alpha-amylases, different alpha-amylases are developed for each particular application. Thus, detergent alpha-amylases are optimized for alkaline pH (above 8) and relatively low temperature (15-60°C) applications, whereas alpha-amylases for use in the production of biofuel or liquefaction of starch are optimized for acidic pH (under 6) and temperatures above 80°C. Thus, it would not be expected that amylases designed for use in liquefaction or biofuel production would be suitable for use in detergents.

There remains need to provide further or improved liquid detergent compositions comprising anionic surfactants which are both storage stable and show good cleaning performance, without the need for enzyme stabilising systems, even if the compositions comprise chelating agents. Chelating agents are incorporated in detergent compositions to

reduce the water hardness during wash, they protect bleaching agents that may also be present, and they may further also have a direct effect on the removal of certain stains.

Moreover, it was found that alpha-amylases sometimes cause malodour problems in liquid detergent compositions containing them.

It is thus an object of the present invention to provide liquid detergent compositions comprising alpha-amylases and anionic surfactants, which compositions have improved storage stability and/or wash performance after storage, compared to compositions comprising closely related alpha-amylases.

It is a further object of the present invention to provide liquid detergent compositions comprising alpha-amylases which can be used in laundry cleaning compositions comprising chelators.

Finally, a further object of the present invention is to provide liquid detergent compositions comprising alpha-amylases that avoid the malodour problems that are sometimes observed. We have now surprisingly found that one or more of these objects can be achieved by the liquid detergent compositions according to the invention comprising a) at least 5 wt.% water, b) at least 3 wt.% of a surfactant system comprising 10 to 100% by weight of the surfactant system of an anionic surfactant, c) an alpha-amylase having at least 95% sequence identity to SEQ ID NO: 1 and said alpha-amylase comprising the substitutions G46A+T47I+G105A+I199F when using SEQ ID NO: 1 for numbering; wherein the detergent further comprises a chelating agent; and wherein the chelating agent is HEDP or another chelating agent having equal or higher chelating capability than HEDP under identical conditions, where said HEDP or another chelating agent is present at a concentration of at least 0.25 wt%. It has also been surprisingly found that the liquid detergent compositions according to the invention may overcome certain malodour problems.

## DEFINITION OF THE INVENTION

According to a first aspect of the invention, there is provided a liquid detergent composition comprising:

a) at least 5 wt.% water,
b) at least 3 wt.% of a mixed surfactant system comprising 10 to 100% by weight of the surfactant system of an anionic surfactant,
c) an alpha-amylase having at least 95% sequence identity to SEQ ID NO: 1 and said alpha-amylase comprising the substitutions G46A+T47I+G105A+I199F when using SEQ ID NO: 1 for numbering; wherein the detergent further comprises a chelating agent; and wherein the chelating agent is HEDP or another chelating agent having equal or higher chelating capability than HEDP under identical conditions, where said HEDP or another chelating agent is present at a concentration of at least 0.25 wt%.

A second aspect of the present invention relates to the use of such a liquid detergent composition for laundry.

According to a third aspect of the present invention there is provided a process of laundering fabrics, comprising laundering a fabric with the above liquid detergent composition, preferably at a temperature of 40°C or less.

## DETAILED DESCRIPTION OF THE INVENTION

### Definitions

**Alpha-amylase:** (alpha-1,4-glucan-4-glucanohydrolases, E.C. 3.2.1.1) constitute a group of enzymes, which catalyze hydrolysis of starch and other linear and branched 1,4-glucosidic oligoand polysaccharides. As used herein, "alpha-amylases" means that the enzyme has alpha-amylase activity.

**Alpha-amylase of SEQ ID NO: 1:**

| | | | |
|---|---|---|---|
| VNGTLMQYFE | WYTPNDGQHW | KRLQNDAEHL | SDIGITAVWI |
| PPAYKGTSQA | DVGYGAYDLY | DLGEFHQKGT | VRTKYGTKGE |
| LQSAIKSLHS | RDINVYGDVV | INHKGGADAT | EDVTAVEVDP |
| ADRNRVISGE | HLIKAWTHFH | FPGRGSTYSD | FKWYWYHFDG |
| TDWDESRKLN | RIYKFQGKTW | DWEVSNEFGN | YDYLMYADID |
| YDHPDVVAEI | KRWGTWYANE | LQLDGFRLDA | VKHIKFSFLR |
| DWVNHVREKT | GKEMFTVAEY | WSNDLGALEN | YLNKTNFNHS |
| VFDVPLHYQF | HAASTQGGGY | DMRKLLNGTV | VSKHPLKSVT |
| FVDNHDTQPG | QSLESTVQTW | FKPLAYAFIL | TRESGYPQVF |
| YGDMYGTKGD | SQREIPALKH | KIEPILKARK | QYAYGAQHDY |
| FDHHDIVGWT | REGDSSVANS | GLAALITDGP | GGAKRMYVGR |
| QNAGETWHDI | TGNRSEPVVI | NSEGWGEFHV | NGGSVSIYVQ |
| R | | | |

This amylase of SEQ ID NO 1 is artificial and may be manufactured by methods known in the art.

**Alpha-amylase of SEQ ID NO: 2:**

| | | | |
|---|---|---|---|
| VNGTLMQYFE | WYTPNDGQHW | KRLQNDAEHL | SDIGITAVWI |
| PPAYKAISQA | DVGYGAYDLY | DLGEFHQKGT | VRTKYGTKGE |
| LQSAIKSLHS | RDINVYGDVV | INHKAGADAT | EDVTAVEVDP |
| ADRNRVISGE | HLIKAWTHFH | FPGRGSTYSD | FKWYWYHFDG |
| TDWDESRKLN | RIYKFQGKTW | DWEVSNEFGN | YDYLMYADFD |
| YDHPDVVAEI | KRWGTWYANE | LQLDGFRLDA | VKHIKFSFLR |
| DWVNHVREKT | GKEMFTVAEY | WSNDLGALEN | YLNKTNFNHS |
| VFDVPLHYQF | HAASTQGGGY | DMRKLLNGTV | VSKHPLKSVT |
| FVDNHDTQPG | QSLESTVQTW | FKPLAYAFIL | TRESGYPQVF |
| YGDMYGTKGD | SQREIPALKH | KIEPILKARK | QYAYGAQHDY |
| FDHHDIVGWT | REGDSSVANS | GLAALITDGP | GGAKRMYVGR |
| QNAGETWHDI | TGNRSEPVVI | NSEGWGEFHV | NGGSVSIYVQ |
| R | | | |

This is the amylase of SEQ ID NO: 1 but having the substitutions G46A+T47I+G105A+I199F.

**Allelic variant:** The term "allelic variant" means any of two or more alternative forms of a gene occupying the same chromosomal locus. Allelic variation arises naturally through mutation, and may result in polymorphism within populations. Gene mutations can be silent (no change in the encoded polypeptide) or may encode polypeptides having

altered amino acid sequences. An allelic variant of a polypeptide is a polypeptide encoded by an allelic variant of a gene.

**cDNA:** The term "cDNA" means a DNA molecule that can be prepared by reverse transcription from a mature, spliced, mRNA molecule obtained from a eukaryotic or prokaryotic cell. cDNA lacks intron sequences that may be present in the corresponding genomic DNA. The initial, primary RNA transcript is a precursor to mRNA that is processed through a series of steps, including splicing, before appearing as mature spliced mRNA.

**Coding sequence:** The term "coding sequence" means a polynucleotide, which directly specifies the amino acid sequence of a variant. The boundaries of the coding sequence are generally determined by an open reading frame, which begins with a start codon such as ATG, GTG or TTG and ends with a stop codon such as TAA, TAG, or TGA. The coding sequence may be a genomic DNA, cDNA, synthetic DNA, or a combination thereof.

**Control sequences:** The term "control sequences" means nucleic acid sequences necessary for expression of a polynucleotide encoding a variant of the present invention. Each control sequence may be native (*i.e.*, from the same gene) or foreign (*i.e.*, from a different gene) to the polynucleotide encoding the variant or native or foreign to each other. Such control sequences include, but are not limited to, a leader, polyadenylation sequence, propeptide sequence, promoter, signal peptide sequence, and transcription terminator. At a minimum, the control sequences include a promoter, and transcriptional and translational stop signals. The control sequences may be provided with linkers for the purpose of introducing specific restriction sites facilitating ligation of the control sequences with the coding region of the polynucleotide encoding a variant.

**Expression:** The term "expression" includes any step involved in the production of a variant including, but not limited to, transcription, post-transcriptional modification, translation, post-translational modification, and secretion.

**Expression vector:** The term "expression vector" means a linear or circular DNA molecule that comprises a polynucleotide encoding a variant and is operably linked to control sequences that provide for its expression.

**Host cell:** The term "host cell" means any cell type that is susceptible to transformation, transfection, transduction, or the like with a nucleic acid construct or expression vector comprising a polynucleotide of the present invention. The term "host cell" encompasses any progeny of a parent cell that is not identical to the parent cell due to mutations that occur during replication.

**Improved property:** The term "improved property" means a characteristic associated with a variant or an alpha-amylase that is improved compared to the parent or to the closest prior art amylase. Such improved properties include, but are not limited to, catalytic efficiency, catalytic rate, chemical stability, pH activity, pH stability, specific activity, stability under storage conditions, wash performance and wash performance after storage, where the storage period may be 1, 2, 3, 4, 5, 6, 7, 8 or more weeks at 30, 37, 40 or 45°C.

**Isolated:** The term "isolated" means a substance in a form or environment which does not occur in nature. Non-limiting examples of isolated substances include (1) any non-naturally occurring substance, (2) any substance including, but not limited to, any enzyme, variant, nucleic acid, protein, peptide or cofactor, that is at least partially removed from one or more or all of the naturally occurring constituents with which it is associated in nature; (3) any substance modified by the hand of man relative to that substance found in nature; or (4) any substance modified by increasing the amount of the substance relative to other components with which it is naturally associated (e.g., multiple copies of a gene encoding the substance; use of a stronger promoter than the promoter naturally associated with the gene encoding the substance). An isolated substance may be present in a fermentation broth sample.

**Mutant:** The term "mutant" means a polynucleotide encoding a variant.

**Nucleic acid construct:** The term "nucleic acid construct" means a nucleic acid molecule, either single-or double-stranded, which is isolated from a naturally occurring gene or is modified to contain segments of nucleic acids in a manner that would not otherwise exist in nature or which is synthetic, which comprises one or more control sequences.

**Parent or parent alpha-amylase:** The term "parent" or "parent alpha-amylase" means an alpha-amylase to which an alteration is made to produce enzyme variants. The alpha-amylase of SEQ ID NO: 1 may be said to be the parent whereas e.g. the alpha-amylase of SEQ ID NO: 1 containing one or more of the substitutions G46A, T47I, G105A and I199F may be said to be a variant of the alpha-amylase of SEQ ID NO: 1. The parent may also be a naturally occurring (wild-type) polypeptide or a variant or fragment thereof or another alpha-amylase having at least 80% sequence identity to the alpha-amylase of SEQ ID NO: 1, such as at least 85, 86, 87, 88, 89, 90, 91, 92, 93, 94, 95, 96, 97, 98 or at least 99% sequence identity to the alpha-amylase of SEQ ID NO: 1.

**Sequence identity:** The relatedness between two amino acid sequences or between two nucleotide sequences is described by the parameter "sequence identity". For purposes of the present invention, the sequence identity between two amino acid sequences is determined using the Needleman-Wunsch algorithm (Needleman and Wunsch, 1970, J. Mol. Biol. 48: 443453) as implemented in the Needle program of the EMBOSS package (EMBOSS: The European Molecular Biology Open Software Suite, Rice et al., 2000, Trends Genet. 16: 276-277), preferably version 5.0.0 or later. The parameters used are gap open penalty of 10, gap extension penalty of 0.5, and the EBLOSUM62 (EMBOSS version of BLOSUM62) substitution matrix. The output of Needle labeled "longest identity" (obtained using the -nobrief option) is used as the percent identity and is calculated as follows:

$$(\text{Identical Residues} \times 100)/(\text{Length of Alignment} - \text{Total Number of Gaps in Alignment})$$

**Variant:** The term "variant" means a polypeptide having alpha-amylase activity comprising an alteration, *i.e.*, a substitution, insertion, and/or deletion, at one or more (e.g., several) positions. A substitution means replacement of the amino acid occupying a position with a different amino acid; a deletion means removal of the amino acid occupying a position; and an insertion means adding an amino acid adjacent to and immediately following the amino acid occupying a position. The alpha-amylase variants of the present invention preferably have at least 90%, at least 95%, or at least 100% of the initial alpha-amylase activity of after two weeks storage in liquid detergent model B at 37°C.

**Wild-type alpha-amylase:** The term "wild-type" alpha-amylase means an alpha-amylase expressed by a naturally occurring microorganism, such as a bacterium, yeast, or filamentous fungus found in nature.

**Wash performance:** The term "wash performance" is used as an enzyme's ability to remove stains present on the object to be cleaned during e.g. wash or hard surface cleaning. The wash performance may be quantified by calculating the so-called delta remission value (ΔRem) as described in the definition herein.

**Delta remission value (ΔRem):** The terms "Delta remission" or "Delta remission value" are defined herein as the result of a reflectance or remission measurement at 460 nm of a test material, e.g. a swatch CS-28 (Center For Testmaterials BV, P.O. Box 120, 3133 KT Vlaardingen, the Netherlands). The swatch is measured with at least one other swatch, washed under identical conditions, as background. The delta remission is the remission value of the test material washed with amylase subtracted the remission value of the test material washed without amylase.

**Improved wash performance:** The term "improved wash performance" is defined herein as a (variant) enzyme (also a blend of enzymes, not necessarily only variants but also backbones, and in combination with certain cleaning composition etc.) displaying an alteration of the wash performance e.g. by increased stain removal.

Detergent composition

The detergent compositions of the present invention are liquid at ambient temperature (for instance 25°C). They may be isotropic or structured and their viscosity may be quite low to very high so that they may resemble gels. They comprise at least 5 wt.% water and are preferably aqueous, whereby water forms the majority of the solvent in the composition. Hydrotropes such as propylene glycol and glycerol/glycerine may be included as co-solvents in a lesser amount than the water. Water is needed in the composition in order to keep the surfactant, any polymers, soluble builders, enzymes etc. in solution. The water amount stated includes both free and any bound water. The amount of water in the composition is preferably at least 20 wt.%, more preferably at least 30 wt.%.

The surfactant system

The liquid detergent according to the invention comprises at least 3 wt.% of a surfactant system comprising 10 to 100% by weight of the surfactant system of an anionic surfactant. Preferably, the liquid detergent comprises at least 3 wt.% to about 40 wt.% of the surfactant system, such as from about 5% to about 30%, including from about 5% to about 15%, or from about 20% to about 25% of the surfactant system. The surfactant system may completely consist of one or more anionic surfactants, but it may also comprise other surfactants such as nonionic and/or cationic surfactants. The surfactant(s) is chosen based on the type of application and includes any conventional surfactant(s) known in the art. The surfactants forming the surfactant system may be chosen from the surfactants described in 'Surface Active Agents' Vol. 1, by Schwartz and Perry, Interscience 1949, Vol. 2 by Schwartz, Perry and Berch, Interscience 1958, 'McCutcheon's Emulsifiers and Detergents' published by Manufacturing Confectioners Company or in Tenside Taschenbuch', H. Stache, 2nd Edn., Carl Hauser Verlag, 1981.

Non-limiting examples of anionic surfactants include sulfates and sulfonates, in particular, linear alkylbenzenesulfonates (LAS), isomers of LAS, branched alkylbenzenesulfonates (BABS), phenylalkanesulfonates, alpha-olefinsulfonates (AOS), olefin sulfonates, alkene sulfonates, alkane-2,3-diylbis(sulfates), hydroxyalkanesulfonates and disulfonates, alkyl sulfates (AS) such as sodium dodecyl sulfate (SDS), fatty alcohol sulfates (FAS), primary alcohol sulfates (PAS), alcohol ethersulfates (AES or AEOS or FES, also known as alcohol ethoxysulfates or fatty alcohol ether sulfates), secondary alkanesulfonates (SAS), paraffin sulfonates (PS), ester sulfonates, sulfonated fatty acid glycerol esters, alpha-sulfo fatty acid methyl esters (alpha-SFMe or SES) including methyl ester sulfonate (MES), alkyl-or alkenylsuccinic acid, dodecenyl/tetradecenyl succinic acid (DTSA), fatty acid derivatives of amino acids, diesters and monoesters of sulfo-succinic acid or soap, and combinations thereof. A preferred alcohol ethersulfate is sodium lauryl ether sulfate or SLES.

A highly preferred surfactant system comprises two different anionic surfactants, preferably linear alkyl benzene sulphonate and a sulphate, for example LAS and SLES.

The anionic surfactant may also include soap (salt of fatty acid). A preferred soap is made by neutralisation of hydrogenated coconut fatty acid, for example Prifac(R) 5908 (ex Croda). Mixtures of saturated and unsaturated fatty

acids may also be used.

Preferably, the surfactant system comprises 10 to 100% by weight, more preferably from 25 to 50% by weight of the surfactant system of linear alkylbenzene sulphonate (LAS). Even more preferably, the surfactant system comprises from 5 to 75% by weight of the surfactant system of linear alkylbenzene sulphonate (LAS) and from 5 to 90% by weight of the surfactant system of sodium lauryl ether sulfate (SLES).

In addition to the anionic surfactant, the detergent compositions will usually contain from about 0.2% to about 50% by weight of the surfactant system of a nonionic surfactant, for example from about 0.5% to about 30%, in particular from about 1% to about 20%, from about 3% to about 10%, such as from about 3% to about 5%, or from about 8% to about 12% of the surfactant system. Suitable nonionic surfactants include alcohol ethoxylates (AE or AEO), alcohol propoxylates, propoxylated fatty alcohols (PFA), alkoxylated fatty acid alkyl esters, such as ethoxylated and/or propoxylated fatty acid alkyl esters, alkylphenol ethoxylates (APE), nonylphenol ethoxylates (NPE), alkylpolyglycosides (APG), alkoxylated amines, fatty acid monoethanolamides (FAM), fatty acid diethanolamides (FADA), ethoxylated fatty acid monoethanolamides (EFAM), propoxylated fatty acid monoethanolamides (PFAM), polyhydroxy alkyl fatty acid amides, or N-acyl N-alkyl derivatives of glucosamine (glucamides, GA, or fatty acid glucamide, FAGA), as well as products available under the trade names SPAN and TWEEN, and combinations thereof. A preferred nonionic surfactant is a C12-C18 ethoxylated alcohol, comprising 3 to 9 ethylene oxide units per molecule. More preferred are C12-C15 primary, linear ethoxylated alcohols with on average 5 to 9 ethylene oxide groups, more preferably on average 7 ethylene oxide groups.

An especially preferred liquid detergent according to the invention comprises from 5 to 75% by weight of the surfactant system of linear alkylbenzene sulphonate (LAS), from 5 to 90% by weight of the surfactant system of sodium lauryl ether sulfate (SLES) and from 5 to 60% by weight of the surfactant system of a non-ionic surfactant.

The surfactant(s) is typically present at a level of from about 0.1% to 60% by weight, such as about 1% to about 40%, or about 3% to about 20%, or about 3% to about 10%. The surfactant(s) is chosen based on the desired cleaning application, and includes any conventional surfactant(s) known in the art. Any surfactant known in the art for use in detergents may be utilized.

If desired, the liquid detergent compositions according to the invention may also contain from about 0% to about 10% by weight of a cationic surfactant. Non-limiting examples of cationic surfactants include alklydimethylethanolamine quat (ADMEAQ), cetyltrimethyl-ammonium bromide (CTAB), dimethyldistearylammonium chloride (DSDMAC), and alkylbenzyl-dimethylammonium, alkyl quaternary ammonium compounds, alkoxylated quaternary ammonium (AQA) compounds, and combinations thereof.

The liquid detergent composition according to the invention may also contain from about 0% to about 10% by weight of a semipolar surfactant. Non-limiting examples of semipolar surfactants include amine oxides (AO) such as alkyldimethylamineoxide, N-(coco alkyl)-N,N-dimethylamine oxide and N-(tallow-alkyl)-N,N-bis(2-hydroxyethyl)amine oxide, fatty acid alkanolamides and ethoxylated fatty acid alkanolamides, and combinations thereof.

Finally, the liquid detergent composition according to the invention may contain from about 0% to about 10% by weight of a zwitterionic surfactant. Non-limiting examples of zwitterionic surfactants include betaine, alkyldimethylbetaine, sulfobetaine, and combinations thereof.

The alpha-amvlase

**Conventions for Designation of Variants and amino acid position number**

For purposes of the present invention, the mature polypeptide disclosed in SEQ ID NO: 1 is used to determine the corresponding amino acid residue in another alpha-amylase. The amino acid sequence of another alpha-amylase is aligned with the mature polypeptide disclosed in SEQ ID NO: 1, and based on the alignment, the amino acid position number corresponding to any amino acid residue in the mature polypeptide disclosed in SEQ ID NO: 1 is determined using the Needleman-Wunsch algorithm (Needleman and Wunsch, 1970, J. Mol. Biol. 48: 443453) as implemented in the Needle program of the EMBOSS package (EMBOSS: The European Molecular Biology Open Software Suite, Rice et al., 2000, Trends Genet. 16: 276277), preferably version 5.0.0 or later. The parameters used are: gap open penalty of 10, gap extension penalty of 0.5, and the EBLOSUM62 (EMBOSS version of BLOSUM62) substitution matrix. Identification of the corresponding amino acid residue in another alpha-amylase can be determined by an alignment of multiple polypeptide sequences using several computer programs including, but not limited to, MUSCLE (multiple sequence comparison by log-expectation; version 3.5 or later; Edgar, 2004, Nucleic Acids Research 32: 1792-1797), MAFFT (version 6.857 or later; Katoh and Kuma, 2002, Nucleic Acids Research 30: 3059-3066; Katoh et al., 2005, Nucleic Acids Research 33: 511-518; Katoh and Toh, 2007, Bioinformatics 23: 372-374; Katoh et al., 2009, Methods in Molecular Biology 537: 39-64; Katoh and Toh, 2010, Bioinformatics 26: 1899-1900), and EMBOSS EMMA employing ClustalW (1.83 or later; Thompson et al., 1994, Nucleic Acids Research 22: 4673-4680), using their respective default parameters.

When the other enzyme has diverged from the mature polypeptide of SEQ ID NO: 1 such that traditional sequence-based comparison fails to detect their relationship (Lindahl and Elofsson, 2000, J. Mol. Biol. 295: 613-615), other pair-wise sequence comparison algorithms can be used. Greater sensitivity in sequence-based searching can be attained using search programs that utilize probabilistic representations of polypeptide families (profiles) to search databases. For example, the PSI-BLAST program generates profiles through an iterative database search process and is capable of detecting remote homologs (Atschul et al., 1997, Nucleic Acids Res. 25: 3389-3402). Even greater sensitivity can be achieved if the family or superfamily for the polypeptide has one or more representatives in the protein structure databases. Programs such as GenTHREADER (Jones, 1999, J. Mol. Biol. 287: 797-815; McGuffin and Jones, 2003, Bioinformatics 19: 874-881) utilize information from a variety of sources (PSI-BLAST, secondary structure prediction, structural alignment profiles, and solvation potentials) as input to a neural network that predicts the structural fold for a query sequence. Similarly, the method of Gough et al., 2000, J. Mol. Biol. 313: 903-919, can be used to align a sequence of unknown structure with the superfamily models present in the SCOP database. These alignments can in turn be used to generate homology models for the polypeptide, and such models can be assessed for accuracy using a variety of tools developed for that purpose.

For proteins of known structure, several tools and resources are available for retrieving and generating structural alignments. For example the SCOP superfamilies of proteins have been structurally aligned, and those alignments are accessible and downloadable. Two or more protein structures can be aligned using a variety of algorithms such as the distance alignment matrix (Holm and Sander, 1998, Proteins 33: 88-96) or combinatorial extension (Shindyalov and Bourne, 1998, Protein Engineering 11: 739-747), and implementation of these algorithms can additionally be utilized to query structure databases with a structure of interest in order to discover possible structural homologs (e.g., Holm and Park, 2000, Bioinformatics 16: 566-567).In describing the variants of the present invention, the nomenclature described below is adapted for ease of reference. The accepted IUPAC single letter or three letter amino acid abbreviation is employed.

Substitutions. For an amino acid substitution, the following nomenclature is used: Original amino acid, position, substituted amino acid. Accordingly, the substitution of threonine at position 226 with alanine is designated as "Thr226Ala" or "T226A". Multiple mutations are separated by addition marks ("+"), e.g., "Gly205Arg + Ser411 Phe" or "G205R + S411F", representing substitutions at positions 205 and 411 of glycine (G) with arginine (R) and serine (S) with phenylalanine (F), respectively.

Deletions. For an amino acid deletion, the following nomenclature is used: Original amino acid, position, *. Accordingly, the deletion of glycine at position 195 is designated as "Gly195*" or "G195*". Multiple deletions are separated by addition marks ("+"), e.g., "Gly195* + Ser411*" or "G195* + S411*".

Insertions. For an amino acid insertion, the following nomenclature is used: Original amino acid, position, original amino acid, inserted amino acid. Accordingly the insertion of lysine after glycine at position 195 is designated "Gly195GlyLys" or "G195GK". An insertion of multiple amino acids is designated [Original amino acid, position, original amino acid, inserted amino acid #1, inserted amino acid #2; etc.]. For example, the insertion of lysine and alanine after glycine at position 195 is indicated as "Gly195GlyLysAla" or "G195GKA".

In such cases the inserted amino acid residue(s) are numbered by the addition of lower case letters to the position number of the amino acid residue preceding the inserted amino acid residue(s). In the above example, the sequence would thus be:

| Parent: | Variant: |
|---|---|
| 195 | 195 195a 195b |
| G | G - K - A |

Multiple alterations. Variants comprising multiple alterations are separated by addition marks ("+"), e.g., "Arg170Tyr+Gly195Glu" or "R170Y+G195E" representing a substitution of arginine and glycine at positions 170 and 195 with tyrosine and glutamic acid, respectively.

Different alterations. Where different alterations can be introduced at a position, the different alterations are separated by a comma, e.g., "Arg170Tyr,Glu" represents a substitution of arginine at position 170 with tyrosine or glutamic acid. Thus, "Tyr167Gly,Ala + Arg170Gly,Ala" designates the following variants: "Tyr167Gly+Arg170Gly", "Tyr167Gly+Arg170Ala", "Tyr167Ala+Arg170Gly", and "Tyr167Ala+Arg170Ala".

The liquid detergent composition of the invention comprises an alpha-amylase having at least 95% sequence identity to SEQ ID NO: 1 and said alpha-amylase comprising the substitutions G46A+T47I+G105A+I199F when using SEQ ID NO: 1 for numbering.

The alpha-amylase may also comprise further alterations. E.g. the amylase may further comprise 1-20 alterations e.g. 1-10 or 1-5, such as 1, 2, 3, 4, 5, 6, 7, 8, 9 or 10 further alterations, where the alterations are independently

substitutions, deletions and/or insertions and the alterations are relative to the amino acid sequence of SEQ ID NO: 1.

The amino acid changes or alterations may be of a minor nature, that is conservative amino acid substitutions or insertions that do not significantly affect the folding and/or activity of the protein; small deletions, typically of 1-30 amino acids; small amino-or carboxyl-terminal extensions, such as an amino-terminal methionine residue; a small linker peptide of up to 20-25 residues; or a small extension that facilitates purification by changing net charge or another function, such as a poly-histidine tract, an antigenic epitope or a binding domain. Examples of conservative substitutions are within the groups of basic amino acids (arginine, lysine and histidine), acidic amino acids (glutamic acid and aspartic acid), polar amino acids (glutamine and asparagine), hydrophobic amino acids (leucine, isoleucine and valine), aromatic amino acids (phenylalanine, tryptophan and tyrosine), and small amino acids (glycine, alanine, serine, threonine and methionine). Amino acid substitutions that do not generally alter specific activity are known in the art and are described, for example, by H. Neurath and R.L. Hill, 1979, in "The Proteins", Academic Press, New York. Common substitutions are Ala/Ser, Val/Ile, Asp/Glu, Thr/Ser, Ala/Gly, Ala/Thr, Ser/Asn, Ala/Val, Ser/Gly, Tyr/Phe, Ala/Pro, Lys/Arg, Asp/Asn, Leu/Ile, Leu/Val, Ala/Glu, and Asp/Gly. Alternatively, the amino acid changes are of such a nature that the physico-chemical properties of the polypeptides are altered. For example, amino acid changes may improve the thermal stability of the polypeptide, alter the substrate specificity, change the pH optimum, and the like.

Essential amino acids in a polypeptide can be identified according to procedures known in the art, such as site-directed mutagenesis or alanine-scanning mutagenesis (Cunningham and Wells, 1989, Science 244: 1081-1085). In the latter technique, single alanine mutations are introduced at every residue in the molecule, and the resultant mutant molecules are tested for alpha-amylase activity to identify amino acid residues that are critical to the activity of the molecule. See also, Hilton et al., 1996, J. Biol. Chem. 271: 4699-4708. The active site of the enzyme or other biological interaction can also be determined by physical analysis of structure, as determined by such techniques as nuclear magnetic resonance, crystallography, electron diffraction, or photo-affinity labeling, in conjunction with mutation of putative contact site amino acids. See, for example, de Vos et al., 1992, Science 255: 306-312; Smith et al., 1992, J. Mol. Biol. 224: 899-904; Wlodaver et al., 1992, FEBS Lett. 309: 59-64. The identity of essential amino acids can also be inferred from an alignment with a related polypeptide.

In other embodiments, the amylase of the liquid detergent composition of the invention has at least 96%, or at least 97%, or at least 98%, or at least 99% but less than 100% sequence identity to the amylase of SEQ ID NO: 1 and comprises the substitutions G46A+T47I+G105A+I199F.

Hereby, liquid detergent compositions having improved stability and/or activity after storage and/or improved wash performance on starch containing stains after storage of the liquid detergents are provided. The storage period may be of at least 1, 2, 3, 4, 5, 6, 7, 8, 9, 10, 11, 12, 13, 14, 15, 16, 17, 18, 19, 20, 21, 22, 23, 24, 25, or at least 26 weeks or even longer periods of time. The temperature during storage may be any relevant temperature, such as between 20 and 40°C, such as 20, 22, 25, 30, 35, 37 or 40°C. The present inventors have found that e.g. after 1 week at 40°C or after 2 weeks' storage at 37 °C, the liquid detergent of the present invention has improved wash performance compared to an identical liquid detergent comprising the alpha-amylase of SEQ ID NO: 1, particularly on starch containing stains (See the Examples below). One reason for this improvement in wash performance may be that the amylases having the above mentioned substitutions in SEQ ID NO: 1 have improved stability in liquid detergents compared to the amylase of SEQ ID NO: 1. Thus, in one embodiment, the invention relates to a liquid detergent composition comprising an alpha-amylase as defined above, which alpha-amylase has an improved storage stability in liquid detergents relative to the alpha-amylase of SEQ ID NO: 1.

The improved storage stability may be determined as residual activity after a storage period of 1 to 8 weeks, such as from 2-6 weeks, preferably 2, 3, 4, 5 or 6 weeks (see Examples). In another embodiment, the invention relates to a liquid detergent composition comprising an amylase as described above wherein the liquid detergent composition has improved wash performance after storage of liquid detergents for two weeks at 37°C, relative to the liquid detergent composition comprising the alpha-amylase of SEQ ID NO: 1.

The liquid detergent composition of the invention further comprises a chelating agent, wherein the chelating agent is HEDP or another chelating agent having equal or higher chelating capability than HEDP under identical conditions, where said HEDP or another chelating agent is present at a concentration of at least 0.25 wt%. As mentioned above, chelating agents may be added to detergent compositions. These agents act to lower the concentration of free calcium ions in the composition. However, most alpha-amylases require calcium for activity. The present inventors have found that the alpha-amylase as defined in claim 1 is surprisingly stable in liquid detergents comprising chelating agents and that it is stable even in liquid detergents comprising high or very high concentration of chelating agents. The capabilities of the chelating agents for reducing the free calcium ion concentration may be characterized according to Example 5 (see also Table 12.1).

In one embodiment, the liquid detergent according to the invention comprises a chelating agent at a concentration of at least 0.25% w/w, such as at least 0.3%, or at least 0.4, such as at least 0.5, or 0.6, 0.7, 0.8, 0.9, 1.0% w/w or even at least 1.5%w/w. The chelating agent has a capability of reducing the free calcium ion concentration equal to or better than the capability of reducing the free calcium ion concentration of the chelating agent HEDP at 0.25% w/w. This

capability of reducing free calcium may be measured in the liquid detergent of model detergent 2 at 21°C or at 37°C. Thus, the chelating agents should be added at a concentration so that the capability of reducing the free calcium ion concentration is at least equal to said capability of HEDP at 0.25% w/w. That is, if using a chelating agent with a capability of reducing the free calcium ion concentration which capability is less than said capability of HEDP at equal concentrations in liquid detergents or in buffer as described below, then the chelating agent should be added at higher concentrations to reach a capability for reducing the free calcium ion concentration which is at least equal to said capability of HEDP at 0.25%w/w. Factors that affect the capability for reducing free calcium ion concentration are known to the person skilled in the art. They include the binding affinity for calcium and the concentration of the chelating agent. In another embodiment, the chelating agent is added in an amount which corresponds to adding at least 0.3%, or at least 0.4, such as at least 0.5, or 0.6, 0.7, 0.8, 0.9 or 1.0% w/w of HEDP or even at least 1.5%, 1.7%, 1.8%, 1.9%, or at least 2.0% w/w of HEDP to the liquid detergent. Thus, the chelating agents should be added at a concentration so that the capability of reducing the free calcium ion concentration in the liquid detergent is at least equal to said capability of HEDP at a concentration of least 0.3%, or at least 0.4, such as at least 0.5, or 0.6, 0.7, 0.8, 0.9 or 1.0% w/w of HEDP or even at least 1.5%, 1.7%, 1.8%, 1.9%, or at least 2.0% w/w.

In another embodiment, the capabilities of reducing the free calcium ion concentration is compared by measuring said capability in 80 mM potassium chloride and 49 mM EPPS at 21°C and pH 8.0. The capability of a chelating agent of reducing free calcium ion concentration is further described below under "characterizing chelating agents". In one embodiment, the chelator is HEDP. In other embodiments the liquid detergent of the invention comprises at least 0.25% w/w HEDP, such as at least 0.3%, or at least 0.4, such as at least 0.5, or 0.6, 0.7, 0.8, 0.9 or 1.0% w/w or even at least 1.2%, 1.3%, 1.4%, 1.5%, 1.6%, 1.7%, 1.8%, 1.9%, or at least 2.0% w/w.

In another embodiment, the liquid detergent of the invention comprises one or more chelating agents in concentrations so that the chelating capability in said detergent at least corresponds to the chelating capabilities obtained when adding 0.25% w/w HEDP.

In another embodiment, the liquid detergent of the invention comprises one or more chelating agents in concentrations so that the chelating capability in said detergent at least corresponds to the chelating capabilities obtained when adding 0.3% w/w HEDP. In another embodiment, the liquid detergent of the invention comprises one or more chelating agents in concentrations so that the chelating capability in said detergent at least corresponds to the chelating capabilities obtained when adding 0.4% w/w HEDP. In another embodiment the liquid detergent of the invention comprises one or more chelating agents in concentrations so that the chelating capability in said detergent at least corresponds to the chelating capabilities obtained when adding 0.5% w/w HEDP. In another embodiment, the liquid detergent of the invention comprises one or more chelating agents in concentrations so that the chelating capability in said detergent at least corresponds to the chelating capabilities obtained when adding 0.6% w/w HEDP.

In another embodiment, the liquid detergent of the invention comprises one or more chelating agents in concentrations so that the chelating capability in said detergent at least corresponds to the chelating capabilities obtained when adding 0.7% w/w HEDP. In another embodiment, the liquid detergent of the invention comprises one or more chelating agents in concentrations so that the chelating capability in said detergent at least corresponds to the chelating capabilities obtained when adding 1.0% w/w HEDP.

In another embodiment, the liquid detergent of the invention comprises one or more chelating agents in concentrations so that the chelating capability in said detergent at least corresponds to the chelating capabilities obtained when adding 1.5% w/w HEDP. In another embodiment the liquid detergent of the invention comprises one or more chelating agents in concentrations so that the chelating capability in said detergent at least corresponds to the chelating capabilities obtained when adding 2.0% w/w HEDP.

In another embodiment, the chelating agent is DTMPA at a concentration of at least 0.25w/w or at least 0.3%, or at least 0.4, such as at least 0.5, or 0.6, 0.7, 0.8, 0.9 or 1.0% w/w of HEDP or even at least 1.5%, 1.7%, 1.8%, 1.9%, or at least 2.0% w/w. In the examples it can be seen that the amylase of the liquid detergent of the present invention (such as the amylase of SEQ ID NO: 1 having mutations G46A+T47I+G105A+I199F) has improved stability and improved wash performance in liquid detergents comprising a high concentration of chelating agents (model detergent 2) compared to liquid detergents comprising the amylase of SEQ ID NO: 1. At longer storage periods and higher temperatures, the difference will be more pronounced. Thus, the liquid detergent composition of the present invention has the advantage that even at high chelator capabilities (for reducing free calcium ion concentration) the amylase is stable and has good wash performance and better performance than Termamyl™ or the amylase of SEQ ID NO 1.

The liquid detergent composition of the invention is a laundry detergent composition. The pH of the liquid detergent composition of the invention may be at least 7.5, 8.0, 8.5 or 9.0. The liquid detergent composition may further comprise one or more cleaning adjuncts as described below, preferably in an amount from 0.01 to 99.9 wt%. In other embodiments, the liquid detergent composition of the invention additionally comprises one or more other enzymes such as a protease, a lipase, a peroxidase, another amylolytic enzyme, glucoamylase, maltogenic amylase, CGTase, mannanase, cutinase, laccase and/or a cellulase.

The alpha-amylase may be added to the liquid detergent composition in an amount corresponding to 0.001-200

mg of protein, such as 0.005-100 mg of protein, preferably 0.01-50 mg of protein, such as 0.028 mg of protein or more preferably 0.05-20 mg of protein, even more preferably 0.1-10 mg of protein per liter of wash liquor.

Although this is not strictly necessary, the alpha-amylase of the detergent composition of the invention may be stabilized using conventional stabilizing agents, e.g. a polyol such as propylene glycol or glycerol, a sugar or sugar alcohol, lactic acid, boric acid, or a boric acid derivative, e.g. an aromatic borate ester, or a phenyl boronic acid derivative such as 4-formylphenyl boronic acid, and the composition may be formulated as described in, for example, WO92/19709 and WO92/19708.

Further ingredients.

**Hydrotropes**

A hydrotrope is a compound that solubilises hydrophobic compounds in aqueous solutions (or oppositely, polar substances in a non-polar environment). Typically, hydrotropes have both hydrophilic and a hydrophobic character (so-called amphiphilic properties as known from surfactants); however the molecular structure of hydrotropes generally do not favour spontaneous self-aggregation, see e.g. review by Hodgdon and Kaler (2007), Current Opinion in Colloid & Interface Science 12: 121-128. Hydrotropes do not display a critical concentration above which self-aggregation occurs as found for surfactants and lipids forming miceller, lamellar or other well defined meso-phases. Instead, many hydrotropes show a continuous-type aggregation process where the sizes of aggregates grow as concentration increases. However, many hydrotropes alter the phase behaviour, stability, and colloidal properties of systems containing substances of polar and non-polar character, including mixtures of water, oil, surfactants, and polymers. Hydrotropes are classically used across industries from pharma, personal care, food, to technical applications. Use of hydrotropes in cleaning or detergent compositions allow for example more concentrated formulations of surfactants (as in the process of compacting liquid detergents by removing water) without inducing undesired phenomena such as phase separation or high viscosity.

The detergent may contain 0-25% by weight, such as about 0.5 to about 10%, or about 2% to about 5%, of a hydrotrope. Any hydrotrope known in the art for use in detergents may be utilized. Non-limiting examples of hydrotropes include sodium benzene sulfonate, sodium p-toluene sulfonate (STS), sodium xylene sulfonate (SXS), sodium cumene sulfonate (SCS), sodium cymene sulfonate, amine oxides, alcohols and polyglycolethers, sodium hydroxynaphthoate, sodium hydroxynaphthalene sulfonate, sodium ethylhexyl sulfate, monoethanolamine, diethanolamine, triethanolamine and combinations thereof.

**Builders and Co-Builders**

The detergent composition may contain about 0-65% by weight, such as about 5% to about 45% of a detergent builder or co-builder, or a mixture thereof. The builder and/or cobuilder may particularly be a chelating agent that forms water-soluble complexes with Ca and Mg. **Chelating agents** or chelators are chemicals which form molecules with certain metal ions, inactivating the ions so that they cannot react with other elements thus a binding agent that suppresses chemical activity by forming chelates. Chelation is the formation or presence of two or more separate bindings between a ligand and a single central atom. The ligand may be any organic compound, a silicate or a phosphate. In the present context the term "chelating agents" comprises chelants, chelating agent, chelating agents, complexing agents, or sequestering agents that forms water-soluble complexes with metal ions such as calcium and magnesium. The chelate effect describes the enhanced affinity of chelating ligands for a metal ion compared to the affinity of a collection of similar nonchelating ligands for the same metal. Chelating agents having binding capacity with metal ions, in particular calcium ($Ca^{2+}$) ions, and has been used widely in detergents and compositions in general for wash, such as laundry or dish wash. Chelating agents have however shown themselves to inhibit enzymatic activity. The term chelating agent is used in the present application interchangeably with "complexing agent" or "chelating agent" or "chelant".

Since most alpha-amylases are calcium sensitive, the presence of chelating agents may impair the enzyme activity. The calcium sensitivity of alpha-amylases can be determined by incubating a given alpha-amylase in the presence of a strong chelating agent and analyze the impact of this incubation on the activity of the alpha-amylase in question. A calcium sensitive alpha-amylase will lose a major part or all of its activity during the incubation.

**Characterizing chelating agents:** As mentioned the chelate effect or the chelating effect describes the enhanced affinity of chelating ligands for a metal ion compared to the affinity of a collection of similar nonchelating ligands for the same metal. However, the strength of this chelate effect can be determined by various types of assays or measure methods thereby differentiating or ranking the chelating agents according to their chelating effect (or strength). In an assay the chelating agents may be characterized by their ability to reduce the concentration of free calcium ions ($Ca^{2+}$) from 2.0 mM to 0.10 mM or less at pH 8.0, e.g. by using a test based on the method described by M.K. Nagarajan et al., JAOCS, Vol. 61, no. 9 (September 1984), pp. 1475-1478. An example of characterization of chelating agents using

the Nagarajan et al. based method is described in example 3a. Preferably, the chelating agent according to the invention encompass chelating agents able to reduce the concentration of free calcium ions from 2.0 mM to 0.1 mM at a concentration that is equal to or lower than the concentration of HEDP necessary to reduce the free calcium ion concentration from 2.0 mM to 0.10 mM at the same conditions. So, the chelating agent of the present invention may have the equal or better "free calcium" reducing capability as HEDP under similar or identical conditions.

Preferably, the chelating agent according to the invention encompasses chelating agents able to reduce the concentration of free calcium ions from 2.0 mM to 0.1 mM at a concentration below 10 mM, preferably below 9.5 mM, preferably below 9 mM, preferably below 8.5 mM, preferably below 8 mM, preferably below 7.5 mM, preferably below 7 mM, preferably below 6.5mM, preferably below 6 mM, preferably below 5.5 mM, preferably, preferably below 5 mM, preferably below 4.5 mM, below 4 mM, preferably below 3.5 mM, preferably below 3 mM, preferably below 2.5 mM, preferably below 2 mM, preferably below 1.5 mM or preferably below 1 mM, when measured in 80 mM potassium chloride and 49 mM EPPS ((4-(2-hydroxyethyl)piperazine-1-propanesulfonic acid)), at pH 8 at 21°C. In a particular preferred embodiment the chelating agent is able to reduce the concentration of free calcium ions from 2.0 mM to 0.1 mM when measured in 80 mM potassium chloride and 49 mM EPPS, at pH 8 and 21°C and using a calcium ion selective electrode for the determination of the free calcium concentration, as described under "Materials and Methods". Thus preferably, the chelating agents encompass chelating agents which are able to reduce the concentration of free calcium ions from 2.0 mM to 0.10 mM at a concentration below 10 mM, preferably below 9.5 mM, preferably below 9.0 mM, preferably below 8.5 mM, preferably below 8.0 mM, preferably below 7.5 mM, preferably below 7.0 mM, preferably below 6.5 mM, preferably below 6.0 mM, preferably below 5.5 mM, preferably, preferably below 5.0 mM, preferably below 4.5 mM, below 4.0 mM, preferably below 3.5 mM, preferably below 3.0 mM, preferably below 2.5 mM, preferably below 2.0 mM, preferably below 1.5 mM or preferably below 1.0 mM when tested at pH 8.0 and 21°C, as described under "Materials and Methods".

In a particularly preferred embodiment, the chelating agent is able to reduce the concentration of free calcium ions from 2.0 mM to 0.10 mM when measured in 80 mM potassium chloride and 49 mM EPPS at pH 8 and 21°C at a concentration of 9 mM to 0.5 mM, preferably 9 mM to 1 mM, preferably 8 mM to 1 mM, preferably 7 mM to 1 mM, preferably 6 mM to 1 mM, preferably 5 mM to 1 mM, preferably 4 mM to 1 mM, preferably 3 mM to 1 mM, preferably 2 mM to 1 mM, preferably 9.0 mM to 1.5 mM, preferably 8.0 mM to 1.5 mM, preferably 7.0 mM to 1.5 mM, preferably 6.0 mM to 1.5 mM, preferably 5.0 mM to 1.5 mM, preferably 4.0 mM to 1.5 mM, preferably 3.0 to 1.5 mM, preferably 2.5 mM to 1.0 mM, preferably 2.0 mM to 1.1 mM, preferably 1.85 mM to 1.0 mM.

The reduction in free calcium ion concentration from 2.0 mM Ca to 0.10 mM, corresponds to reducing the water hardness from 200 ppm (as CaCO3, in the form of Ca(HCO3)2 in the presence of acidic CO2) to 10 ppm. The minimum builder level is calculated from the sodium salt of the chelant and on a 100% dry chelant basis.

The chelating effect of the chelating agent can also be measured relative to citrate. The concentration of the citrate able to reduce the amount of free calcium ion concentration from 2.0 mM to 0.10 mM is assigned the value of 1 and the results of the chelating agents are compared to this value. The preferred chelating agent according to the invention is capable of reducing the free calcium concentration from 2.0 mM to 0.10 mM at a concentration below 0.9, such as below 0.8, such as below 0.7, such as below 0.6, such as below 0.5, such as below 0.4, such as below 0.3, such as below 0.2, such as below 0.1 times lower compared to the concentration of citrate, when measured at pH 8.0 and 21 °C. The preferred chelating agent according to the invention is capable of reducing the free calcium concentration from 2.0 mM to 0.10 mM at a concentration below 0.9, such as below 0.8, such as below 0.7, such as below 0.6, such as below 0.5, such as below 0.4, such as below 0.3, such as below 0.2, such as below 0.1 times lower compared to the concentration of citrate, when measured in pH 8.0 at 21°C using a calcium ion selective electrode for the determination of the free calcium concentration when measured in 80 mM potassium chloride and 49 mM EPPS at 21°C and pH 8.0.

In a particularly preferred embodiment, the chelating agent is able to reduce the concentration of free calcium ions from 2.0 mM to 0.10 mM at a chelating agent concentration below 1.0 to 0.1, such as below 0.9 to 0.1, such as below 0.8 to 0.1, such as below 0.7 to 0.1, such as below 0.6 to 0.1, such as below 0.5 to 0.1, such as below 0.4 to 0.1, such as below 0.35 to 0.1, such as below 0.3 to 0.1 times lower compared to the concentration of citrate able to reduce the concentration of free calcium ions from 2.0 mM to 0.10 mM, when measured at pH 8.0 and 21 °C. Thus the chelating agent according to the invention may be able to reduce the free calcium ion concentration from 2.0 mM to 0.10 mM at a concentration lower than the concentration of HEDP necessary to reduce the free calcium ion concentration from 2.0 mM to 0.10 mM at the same conditions.

Alternatively, the strength of the complex formed between the chelating agent and metal ions such as calcium and/or magnesium, is expressed as the log K value (equilibrium or binding or dissociating or stability constant). This constant may be measured at a given pH, at a given temperature and at a given ionic strength. As mentioned above the strength of the complex formed between the chelating agent and the metal ions e.g. calcium and/or magnesium may be expressed as the log K value (equilibrium or binding or dissociating or stability constant), the constant may be measured by isothermal titration calorimetry (ITC) as described in A. Nielsen et al., Anal. Biochem. Vol. 314, (2003), pp 227-234 and from the K value, the log K can be calculated as the logarithm of the K value (base 10). The log K value

measured by this method will depend on the temperature, pH, ion strength, so it is important when comparing log K values, that they are determined at similar, preferably the same, conditions. Furthermore, by introducing a standard as reference, such as citrate, impacts from variations in the experiments can be reduced. Preferably log K is determined as described under "Materials and Methods" of the present application thus in one embodiment of the invention the chelating agent in the composition according to the invention has a log K of at least 3, such as at least 4, such as at least 5, such as at least 6, such as at least 7, such as at least 8, such as at least 9, such as at least 10, such as at least 11, when the log K is measured at pH 10 and 19°C as described under "Materials and Methods". The log K value of the chelating agent in the compositions according to the invention may also be in the range 3-11, such as 3-10, such as 3-9, such as 3-8, such as 4-11, such as 5-11 such as 6-11, such as 4-10, such as 5-10, such as 4-9, such as 5-9, such as 4-8, in particularly 5-8. Preferably, the log K of the chelating agent in the composition according to the invention is a factor of at least 1, such as at least 1.33, such as at least 1.67, such as at least 2, such as at least 2.33, such as at least 2.67, such as at least 3, such as at least 3.33, such as at least 3.67 times the log K of citrate determined as described under "Materials and Methods". The chelating agent in the compositions according to the invention may also be in the range of a factor 1-3.67, such as 1-3.33, such as 1-3.00, such as 1-2.67, such as 1.33-3.67, such as 1.33-3.33, such as 1.33-3.00, such as 1.33-2.67, such as 1.67-3.67, such as 1.67-3.33, such as 1.67-3, in particular 1.67-2.67 times the log K of citrate determined as described under "Materials and Methods". Useful chelating agents may be, but are not limited to, the following: N-(1,2-dicarboxyethyl)-D,L-aspartic acid (IDS), N-(2-hydroxyethyl)iminodiacetic acid (EDG), aspartic acid-N-monoacetic acid (ASMA), aspartic acid-N,N-diacetic acid (ASDA), aspartic acid-N-monopropionic acid (ASMP), iminodisuccinic acid (IDA), N-(2-sulfomethyl) aspartic acid (SMAS), N-(2-sulfoethyl) aspartic acid (SEAS), N-(2-sulfomethyl) glutamic acid (SMGL), N-(2-sulfoethyl) glutamic acid (SEGL), N-methyliminodiacetic acid (MIDA), α-alanine-N,Ndiacetic acid (α-ALDA) , serine-N,N-diacetic acid (SEDA), isoserine-N,N-diacetic acid (ISDA), phenylalanine-N,N-diacetic acid (PHDA), anthranilic acid-N ,N -diacetic acid (ANDA), sulfanilic acid-N, N-diacetic acid (SLDA), taurine-N, N-diacetic acid (TUDA), sulfomethyl-N,N-diacetic acid (SMDA), N-(hydroxyethyl)-ethylidenediaminetriacetate (HEDTA), diethanolglycine (DEG), aminotris(methylenephosphonic acid) (ATMP).

The preferred chelating agent may contain an amino group and may be, e.g., an amino-polycarboxylate or a phosphonate. It may be a monomeric molecule comprising one, two or three amino groups (typically secondary or tertiary amino groups), and it may contain two, three, four or five carboxyl groups or even more carboxyl groups. The chelating agents may be phosphorus containing or without phosphor. There are many ways of grouping chelating agents one way might be as follows:

Chelating agents may be carboxylates or be based on carboxylate groups like EDTA (ethylene diamine tetraacetate), NTA (2,2',2''-nitrilotriacetate), citrate, 2-hydroxypropan-1,2,3-tricarboxylate, DTPA (diethylenetriaminepentaacetic acid), MGDA (methylglycinediacetic acid or *N*,*N'*-bis(carboxymethyl)alanine), EGTA (ethylene glycol tetraacetic acid), EDDS (ethylenediamine-*N*,*N*-disuccinic acid), GLDA (L-Glutamic acid, N,N-diacetic acid), Polycarboxylates such as PAA [poly(acrylic acid)], PAA/PMA [copoly(acrylic acid/maleic acid)].

Chelating agents containing phosphorous may be polyphosphates or phosphonates, such as Sodium tripolyphosphate (STP), HEDP (1-Hydroxyethylidene-1,1-Diphosphonic Acid), EDTMP [bis(phosphonomethyl)amino] methylphosphonic acid] or (ethylenediamine tetra(methylene phosphonic acid)), EDTMPA (ethylenediaminetetramethylenetetraphosphonic acid), DTPMP (diethylenetriamine penta (methylene phosphonic acid), DTMPA (diethylenetriaminepenta(methylene-phosphonic acid)). The chelating agents may contain nitrogen such as in EDTA, NTA, DTPA, PDTA, GLDA, MGDA, EDDS, EDTMP, EDTMPA, and DTPMP or ASMA, ASDA, ASMP, IDA, SMAS, SEAS, SMGL, SEGL, MIDA, α-ALDA, SEDA, ISDA, PHDA, ANDA, SLDA, TUDA, SMDA, HEDTA, DEG, ATMP, or mixtures thereof.

Thus, the preferred chelating agents may be but are not limited to the following: *ethylenediamine-tetra-acetic acid* (EDTA), diethylene triamine penta methylene phosphonic acid (DTMPA, DTPMP), hydroxy-ethane diphosphonic acid (HEDP), ethylenediamine N,N'-disuccinic acid (EDDS), methyl glycine di-acetic acid (MGDA), diethylene triamine penta acetic acid (DTPA), propylene diamine tetraacetic acid (PDTA), 2-hydroxypyridine-N-oxide (HPNO), methyl glycine diacetic acid (MGDA), glutamic acid N,N-diacetic acid (N,N-dicarboxymethyl glutamic acid tetrasodium salt (GLDA) and nitrilotriacetic acid (NTA) or mixtures thereof. The chelating agents may be present in their acid form or a salt, preferably the chelating agents may be present as a sodium, potassium, ammonium or amine (such as triethanolamine and monoethanolamine) salts.

Further chelating agents may be chelating agents which originate from plant material, such as e.g. starch-containing material as described in detail below. Examples of such natural chelating agents are, but are not limited to, phytic acid (also known as Inositol hexaphosphoric acid (IP6), or phytin, or phytate when in salt for), Inositol diphosphoric acid, Inositol triphosphoric or Inositol pentaphosphoric acid. The chelating agent may be present in the composition in an amount from 0.0001 wt% to 20wt%, preferably from 0.01 to 10 wt%, more preferably from 0.1 to 5wt%.

## Bleaching Systems

The liquid detergent composition of the invention may contain 0-50% by weight, such as about 0.1% to about

25%, of a bleaching system. Any bleaching system known in the art for use in liquid laundry detergents may be utilized. Suitable bleaching system components include bleaching catalysts, photobleaches, bleach activators, sources of hydrogen peroxide such as sodium percarbonate and sodium perborates, preformed peracids and mixtures thereof. Suitable preformed peracids include, but are not limited to, peroxycarboxylic acids and salts, percarbonic acids and salts, perimidic acids and salts, peroxymonosulfuric acids and salts, for example, Oxone (R), and mixtures thereof. Non-limiting examples of bleaching systems include peroxide-based bleaching systems, which may comprise, for example, an inorganic salt, including alkali metal salts such as sodium salts of perborate (usually mono-or tetra-hydrate), percarbonate, persulfate, perphosphate, persilicate salts, in combination with a peracid-forming bleach activator. The term bleach activator is meant herein as a compound which reacts with peroxygen bleach like hydrogen peroxide to form a peracid. The peracid thus formed constitutes the activated bleach. Suitable bleach activators to be used herein include those belonging to the class of esters amides, imides or anhydrides. Suitable examples are tetracetylethylene diamine (TAED), sodium 4-[(3,5,5-trimethylhexanoyl) oxy]benzene sulfonate (ISONOBS), diperoxy dodecanoic acid, 4-(dodecanoyloxy) benzenesulfonate (LOBS), 4-(decanoyloxy) benzenesulfonate, 4-(decanoyloxy)benzoate (DOBS), 4-(nonanoyloxy)benzenesulfonate (NOBS), and/or those disclosed in WO98/17767. A particular family of bleach activators of interest was disclosed in EP624154 and particulary preferred in that family is acetyl triethyl citrate (ATC). ATC or a short chain triglyceride like triacetin has the advantage that it is environmental friendly as it eventually degrades into citric acid and alcohol. Furthermore acetyl triethyl citrate and triacetin has a good hydrolytical stability in the product upon storage and it is an efficient bleach activator. Finally ATC provides a good building capacity to the laundry additive. Alternatively, the bleaching system may comprise peroxyacids of, for example, the amide, imide, or sulfone type. The bleaching system may also comprise peracids such as 6(phthalimido)peroxyhexanoic acid (PAP). The bleaching system may also include a bleach catalyst. In some embodiments the bleach component may be an organic catalyst selected from the group consisting of organic catalysts having the following formulae:

(i)

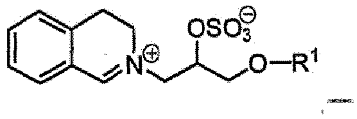

(ii)

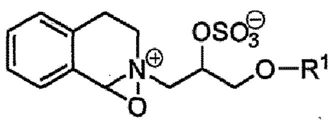

(iii) and mixtures thereof; wherein each R1 is independently a branched alkyl group containing from 9 to 24 carbons or linear alkyl group containing from 11 to 24 carbons, preferably each R1 is independently a branched alkyl group containing from 9 to 18 carbons or linear alkyl group containing from 11 to 18 carbons, more preferably each R1 is independently selected from the group consisting of 2-propylheptyl, 2-butyloctyl, 2-pentylnonyl, 2-hexyldecyl, n-dodecyl, n-tetradecyl, n-hexadecyl, n-octadecyl, iso-nonyl, isodecyl, iso-tridecyl and iso-pentadecyl. Other exemplary bleaching systems are described, e.g. in WO2007/087258, WO2007/087244, WO2007/087259 and WO2007/087242. Suitable photobleaches may for example be sulfonated zinc phthalocyanine.

## Polymers

The liquid detergent composition of the invention may contain 0-10% by weight, such as 0.5-5%, 2-5%, 0.5-2% or 0.2-1% of a polymer. Any polymer known in the art for use in detergents may be utilized. The polymer may function as a co-builder as mentioned above, or may provide antiredeposition, fiber protection, soil release, dye transfer inhibition, grease cleaning and/or anti-foaming properties. Some polymers may have more than one of the above-mentioned properties and/or more than one of the below-mentioned motifs. Exemplary polymers include (carboxymethyl)cellulose (CMC), poly(vinyl alcohol) (PVA), poly(vinylpyrrolidone) (PVP), poly(ethyleneglycol) or poly(ethylene oxide) (PEG), ethoxylated poly(ethyleneimine), carboxymethyl inulin (CMI), and polycarboxylates such as PAA, PAA/PMA, poly-aspartic acid, and lauryl methacrylate/acrylic acid copolymers, hydrophobically modified CMC (HM-CMC) and silicones, copolymers of terephthalic acid and oligomeric glycols, copolymers of poly(ethylene terephthalate) and poly(oxyethene terephthalate) (PET-POET), PVP, poly(vinylimidazole) (PVI), poly(vinylpyridine-N-oxide) (PVPO or PVPNO) and polyvinylpyrrolidone-vinylimidazole (PVPVI). Further exemplary polymers include sulfonated polycarboxylates, polyethylene oxide

and polypropylene oxide (PEO-PPO) and diquaternium ethoxy sulfate. Other exemplary polymers are disclosed in, e.g., WO 2006/130575. Salts of the above-mentioned polymers are also contemplated.

## Fabric hueing agents

The liquid detergent composition of the present invention may also include fabric hueing agents such as dyes or pigments, which when formulated in detergent compositions can deposit onto a fabric when said fabric is contacted with a wash liquor comprising said detergent compositions and thus altering the tint of said fabric through absorption/reflection of visible light. Fluorescent whitening agents emit at least some visible light. In contrast, fabric hueing agents alter the tint of a surface as they absorb at least a portion of the visible light spectrum. Suitable fabric hueing agents include dyes and dye-clay conjugates, and may also include pigments. Suitable dyes include small molecule dyes and polymeric dyes. Suitable small molecule dyes include small molecule dyes selected from the group consisting of dyes falling into the Colour Index (C.I.) classifications of Direct Blue, Direct Red, Direct Violet, Acid Blue, Acid Red, Acid Violet, Basic Blue, Basic Violet and Basic Red, or mixtures thereof, for example as described in WO2005/03274, WO2005/03275, WO2005/03276 and EP1876226 (hereby incorporated by reference). The detergent composition preferably comprises from about 0.00003 wt% to about 0.2 wt%, from about 0.00008 wt% to about 0.05 wt%, or even from about 0.0001 wt% to about 0.04 wt% fabric hueing agent. The composition may comprise from 0.0001 wt% to 0.2 wt% fabric hueing agent, this may be especially preferred when the composition is in the form of a unit dose pouch. Suitable hueing agents are also disclosed in, e.g. WO 2007/087257 and WO2007/087243.

## Additional Enzymes

The liquid detergent composition may comprise one or more additional enzymes such as a protease, lipase, cutinase, additional amylase, carbohydrase, cellulase, pectinase, mannanase, arabinase, galactanase, xylanase, oxidase, e.g., a laccase, and/or peroxidase. In general the properties of the selected enzyme(s) should be compatible with the selected detergent, (i.e., pH-optimum, compatibility with other enzymatic and non-enzymatic ingredients, etc.), and the enzyme(s) should be present in effective amounts.

Cellulases: Suitable cellulases include those of bacterial or fungal origin. Chemically modified or protein engineered mutants are included. Suitable cellulases include cellulases from the genera Bacillus, Pseudomonas, Humicola, Fusarium, Thielavia, Acremonium, e.g., the fungal cellulases produced from Humicola insolens, Myceliophthora thermophila and Fusarium oxysporum disclosed in US 4,435,307, US 5,648,263, US 5,691,178, US 5,776,757 and WO 89/09259. Especially suitable cellulases are the alkaline or neutral cellulases having colour care benefits. Examples of such cellulases are cellulases described in EP 0 495 257, EP 0 531 372, WO 96/11262, WO 96/29397, WO 98/08940, WO 02/099091. Other examples are cellulase variants such as those described in WO 94/07998, EP 0 531 315, US 5,457,046, US 5,686,593, US 5,763,254, WO 95/24471, WO 98/12307 and PCT/DK98/00299. Commercially available cellulases include Celluzyme®, and Carezyme®, Carezyme Premium®, Celluclean® (Novozymes A/S), Clazinase™, and Puradax HA™ (Genencor International Inc.), and KAC-500(B)™ (Kao Corporation).

Proteases: Suitable proteases include those of animal, vegetable or microbial origin. Microbial origin is preferred. Chemically modified or protein engineered mutants are included. The protease may be a serine protease or a metalloprotease, preferably an alkaline microbial protease or a trypsin-like protease. Examples of alkaline proteases are subtilisins, especially those derived from Bacillus, e.g., subtilisin Novo, subtilisin Carlsberg, subtilisin 309, subtilisin 147 and subtilisin 168 (described in WO 89/06279). Examples of trypsin-like proteases are trypsin (e.g., of porcine or bovine origin) and the Fusarium protease described in WO 89/06270 and WO 94/25583. Examples of useful proteases are the variants described in WO 92/19729, WO 98/20115, WO 98/20116, and WO 98/34946, especially the variants with substitutions in one or more of the following positions: 27, 36, 57, 76, 87, 97, 101, 104, 120, 123, 167, 170, 194, 206, 218, 222, 224, 235, and 274. Preferred commercially available protease enzymes include Alcalase™, Savinase™, Primase™, Duralase™, Esperase™, and Kannase™ (Novozymes A/S), Maxatase™, Maxacal™, Maxapem™, Properase™, Purafect™, Purafect OxP™, FN2™, and FN3™ (Genencor International Inc.).

Lipases and Cutinases: Suitable lipases and cutinases include those of bacterial or fungal origin. Chemically modified or protein engineered mutants are included. Examples include lipase from Thermomyces, e.g., from T. lanuginosus (previously named Humicola lanuginosa) as described in EP 258 068 and EP 305 216, cutinase from Humicola, e.g. H. insolens as described in WO 96/13580, a Pseudomonas lipase, e.g., from P. alcaligenes or P. pseudoalcaligenes (EP 218 272), P. cepacia (EP 331 376), P. stutzeri (GB 1,372,034), P. fluorescens, Pseudomonas sp. strain SD 705 (WO 95/06720 and WO 96/27002), P. wisconsinensis (WO 96/12012), a Bacillus lipase, e.g., from B. subtilis (Dartois et al., 1993, Biochemica et Biophysica Acta, 1131: 253-360), B. stearothermophilus (JP 64/744992) or B. pumilus (WO 91/16422). Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079, WO 97/07202, WO 00/060063, WO2007/087508 and WO 2009/109500. Preferred commercially available lipase enzymes include LipolaseTM, Lipolase UltraTM, and Lipex™; LecitaseTM, LipolexTM; LipocleanTM, LipoprimeTM (Novozymes A/S). Other commercially available lipases include Lumafast (Genencor Int Inc); Lipomax (Gist-Brocades/Genencor Int Inc) and Bacillus sp. lipase from Solvay.

Peroxidases/Oxidases: Suitable peroxidases/oxidases include those of plant, bacterial or fungal origin. Chemically modified or protein engineered mutants are included. Examples of useful peroxidases include peroxidases from Coprinus, e.g., from C. cinereus, and variants thereof as those described in WO 93/24618, WO 95/10602, and WO 98/15257. Commercially available peroxidases include Guardzyme™ (Novozymes A/S).

The detergent enzyme(s) may be included in a detergent composition by adding separate additives containing one or more enzymes, or by adding a combined additive comprising all of these enzymes. A detergent additive of the invention, i.e., a separate additive or a combined additive, can be formulated, for example, as a granulate, liquid, slurry, etc. Preferred detergent additive formulations are granulates, in particular non-dusting granulates, liquids, in particular stabilized liquids, or slurries.

Non-dusting granulates may be produced, e.g. as disclosed in US 4,106,991 and 4,661,452 and may optionally be coated by methods known in the art. Examples of waxy coating materials are poly(ethylene oxide) products (polyethyleneglycol, PEG) with mean molar weights of 1000 to 20000; ethoxylated nonylphenols having from 16 to 50 ethylene oxide units; ethoxylated fatty alcohols in which the alcohol contains from 12 to 20 carbon atoms and in which there are 15 to 80 ethylene oxide units; fatty alcohols; fatty acids; and mono-and di- and triglycerides of fatty acids. Examples of film-forming coating materials suitable for application by fluid bed techniques are given in GB 1483591. Liquid enzyme preparations may, for instance, be stabilized by adding a polyol such as propylene glycol, a sugar or sugar alcohol, lactic acid or boric acid according to established methods. Protected enzymes may be prepared according to the method disclosed in EP 238,216.

## Adjunct materials

Any detergent components known in the art for use in liquid laundry detergents may also be utilized. Other optional detergent components include anti-corrosion agents, anti-shrink agents, anti-soil redeposition agents, anti-wrinkling agents, bactericides, binders, corrosion inhibitors, disintegrants/disintegration agents, dyes, enzyme stabilizers (including boric acid, borates, CMC, and/or polyols such as propylene glycol), fabric conditioners including clays, fillers/processing aids, fluorescent whitening agents/optical brighteners, foam boosters, foam (suds) regulators, perfumes, soil-suspending agents, softeners, suds suppressors, tarnish inhibitors, and wicking agents, either alone or in combination. The choice of such ingredients is well within the skill of the artisan.

Dispersants -The detergent compositions of the present invention can also contain dispersants. In particular powdered detergents may comprise dispersants. Suitable water-soluble organic materials include the homo-or co-polymeric acids or their salts, in which the polycarboxylic acid comprises at least two carboxyl radicals separated from each other by not more than two carbon atoms. Suitable dispersants are for example described in Powdered Detergents, Surfactant science series volume 71, Marcel Dekker, Inc.

Dye Transfer Inhibiting Agents -The detergent compositions of the present invention may also include one or more dye transfer inhibiting agents. Suitable polymeric dye transfer inhibiting agents include, but are not limited to, polyvinylpyrrolidone polymers, polyamine N-oxide polymers, copolymers of N-vinylpyrrolidone and N-vinylimidazole, polyvinyloxazolidones and polyvinylimidazoles or mixtures thereof. When present in a subject composition, the dye transfer inhibiting agents may be present at levels from about 0.0001 % to about 10%, from about 0.01% to about 5% or even from about 0.1% to about 3% by weight of the composition.

Fluorescent whitening agent -The detergent compositions of the present invention will preferably also contain additional components that may tint articles being cleaned, such as fluorescent whitening agent or optical brighteners. Where present the brightener is preferably at a level of about 0.01% to about 0.5%. Any fluorescent whitening agent suitable for use in a laundry detergent composition may be used in the composition of the present invention. The most commonly used fluorescent whitening agents are those belonging to the classes of diaminostilbene-sulfonic acid derivatives, diarylpyrazoline derivatives and bisphenyl-distyryl derivatives. Examples of the diaminostilbene-sulfonic acid derivative type of fluorescent whitening agents include the sodium salts of: 4,4'-bis-(2-diethanolamino-4-anilino-s-triazin-6-ylamino) stilbene-2,2'-disulfonate, 4,4'-bis-(2,4-dianilino-s-triazin-6-ylamino) stilbene-2,2'-disulfonate, 4,4'-bis-(2-anilino-4-(N-methyl-N-2-hydroxy-ethylamino)-s-triazin-6-ylamino) stilbene-2,2'-disulfonate, 4,4'-bis-(4-phenyl-1,2,3-triazol-2-yl)stilbene-2,2'-disulfonate and sodium 5-(2H-naphtho[1,2-d][1,2,3]triazol-2-yl)-2-[(E)-2-phenylvinyl]benzenesulfonate. Preferred fluorescent whitening agents are Tinopal DMS and Tinopal CBS available from Ciba-Geigy AG, Basel, Switzerland. Tinopal DMS is the disodium salt of 4,4'-bis-(2-morpholino-4-anilino-s-triazin-6-ylamino) stilbene-2,2'-disulfonate. Tinopal CBS is the disodium salt of 2,2'-bis-(phenyl-styryl)-disulfonate. Also preferred are fluorescent whitening agents is the commercially available Parawhite KX, supplied by Paramount Minerals and Chemicals, Mumbai, India. Other fluorescers suitable for use in the invention include the 1-3-diaryl pyrazolines and the 7-alkylaminocoumarins. Suitable fluorescent brightener levels include lower levels of from about 0.01, from 0.05, from about 0.1 or even from

about 0.2 wt % to upper levels of 0.5 or even 0.75 wt%.

Soil release polymers -The detergent compositions of the present invention may also include one or more soil release polymers which aid the removal of soils from fabrics such as cotton and polyester based fabrics, in particular the removal of hydrophobic soils from polyester based fabrics. The soil release polymers may for example be nonionic or anionic terephthalte based polymers, polyvinyl caprolactam and related copolymers, vinyl graft copolymers, polyester polyamides see for example Chapter 7 in Powdered Detergents, Surfactant science series volume 71, Marcel Dekker, Inc. Another type of soil release polymers are amphiphilic alkoxylated grease cleaning polymers comprising a core structure and a plurality of alkoxylate groups attached to that core structure. The core structure may comprise a polyalkylenimine structure or a polyalkanolamine structure as described in detail in WO 2009/087523 (hereby incorporated by reference). Furthermore random graft co-polymers are suitable soil release polymers. Suitable graft co-polymers are described in more detail in WO 2007/138054, WO 2006/108856 and WO 2006/113314 (hereby incorporated by reference). Other soil release polymers are substituted polysaccharide structures especially substituted cellulosic structures such as modified cellulose deriviatives such as those described in EP 1867808 or WO 2003/040279 (both are hereby incorporated by reference). Suitable cellulosic polymers include cellulose, cellulose ethers, cellulose esters, cellulose amides and mixtures thereof. Suitable cellulosic polymers include anionically modified cellulose, nonionically modified cellulose, cationically modified cellulose, zwitterionically modified cellulose, and mixtures thereof. Suitable cellulosic polymers include methyl cellulose, carboxy methyl cellulose, ethyl cellulose, hydroxyl ethyl cellulose, hydroxyl propyl methyl cellulose, ester carboxy methyl cellulose, and mixtures thereof.

Anti-redeposition agents -The detergent compositions of the present invention may also include one or more anti-redeposition agents such as carboxymethylcellulose (CMC), polyvinyl alcohol (PVA), polyvinylpyrrolidone (PVP), polyoxyethylene and/or polyethyleneglycol (PEG), homopolymers of acrylic acid, copolymers of acrylic acid and maleic acid, and ethoxylated polyethyleneimines. The cellulose based polymers described under soil release polymers above may also function as anti-redeposition agents.

Other suitable adjunct materials include, but are not limited to, anti-shrink agents, anti-wrinkling agents, bactericides, binders, carriers, dyes, enzyme stabilizers, fabric softeners, fillers, foam regulators, hydrotropes, perfumes, pigments, sod suppressors, solvents, and structurants for liquid detergents and/or structure elasticizing agents.

Form of the liquid detergent products

The liquid detergent composition of the invention may be in any convenient form, e.g., a pouch having one or more compartments, a paste, a gel, or a regular, compact or concentrated liquid. There are a number of detergent formulation forms such as layers (same or different phases), pouches, as well as forms for machine dosing unit.

Pouches can be configured as single or multi compartments. It can be of any form, shape and material which is suitable for hold the composition, e.g. without allowing the release of the composition to release of the composition from the pouch prior to water contact. The pouch is made from water soluble film which encloses an inner volume. Said inner volume can be divided into compartments of the pouch. Preferred films are polymeric materials preferably polymers which are formed into a film or sheet. Preferred polymers, copolymers or derivates thereof are selected polyacrylates, and water soluble acrylate copolymers, methyl cellulose, carboxy methyl cellulose, sodium dextrin, ethyl cellulose, hydroxyethyl cellulose, hydroxypropyl methyl cellulose, malto dextrin, poly methacrylates, most preferably polyvinyl alcohol copolymers and, hydroxypropyl methyl cellulose (HPMC). Preferably the level of polymer in the film for example PVA is at least about 60%. Preferred average molecular weight will typically be about 20,000 to about 150,000. Films can also be of blended compositions comprising hydrolytically degradable and water soluble polymer blends such as polylactide and polyvinyl alcohol (known under the Trade reference M8630 as sold by MonoSol LLC, Indiana, USA) plus plasticisers like glycerol, ethylene glycerol, propylene glycol, sorbitol and mixtures thereof. The pouches can comprise a solid laundry cleaning composition or part components and/or a liquid cleaning composition or part components separated by the water soluble film. The compartment for liquid components can be different in composition than compartments containing solids. Ref: (US2009/0011970 A1).

Detergent ingredients can be separated physically from each other by compartments in water dissolvable pouches or in different layers of tablets. Thereby negative storage interaction between components can be avoided. Different dissolution profiles of each of the compartments can also give rise to delayed dissolution of selected components in the wash solution.

A liquid or gel detergent, which is not unit dosed, may be aqueous, typically containing at least 20% by weight and up to 95% water, such as up to about 70% water, up to about 65% water, up to about 55% water, up to about 45% water, up to about 35% water. Other types of liquids, including without limitation, alkanols, amines, diols, ethers and polyols may be included in an aqueous liquid or gel. An aqueous liquid or gel detergent may contain from 0-30% organic solvent. The liquid or gel detergent may be non-aqueous, containing from about 5% to less than about 15 or 10 wt.% water.

The liquid detergent composition of the present invention may be formulated, for example, as a hand or machine laundry detergent composition including a laundry additive composition suitable for pre-treatment of stained fabrics and

a rinse added fabric softener composition.

Preparation of alpha-amylases for use in the present invention

The alpha-amylases (variants) of the detergent composition can be prepared using any mutagenesis procedure known in the art, such as site-directed mutagenesis, synthetic gene construction, semi-synthetic gene construction, random mutagenesis, shuffling, etc. Site-directed mutagenesis is a technique in which one or more (e.g., several) mutations are introduced at one or more defined sites in a polynucleotide encoding the parent.

Site-directed mutagenesis can be accomplished in vitro by PCR involving the use of oligonucleotide primers containing the desired mutation. Site-directed mutagenesis can also be performed in vitro by cassette mutagenesis involving the cleavage by a restriction enzyme at a site in the plasmid comprising a polynucleotide encoding the parent and subsequent ligation of an oligonucleotide containing the mutation in the polynucleotide. Usually the restriction enzyme that digests the plasmid and the oligonucleotide is the same, permitting sticky ends of the plasmid and the insert to ligate to one another. See, e.g., Scherer and Davis, 1979, Proc. Natl. Acad. Sci. USA 76: 4949-4955; and Barton et al., 1990, Nucleic Acids Res. 18: 7349-4966.

Site-directed mutagenesis can also be accomplished in vivo by methods known in the art. See, e.g., U.S. Patent Application Publication No. 2004/0171154; Storici et al., 2001, Nature Biotechnol. 19: 773-776; Kren et al., 1998, Nat. Med. 4: 285-290; and Calissano and Macino, 1996, Fungal Genet. Newslett. 43: 15-16. Any site-directed mutagenesis procedure can be used in the present invention. There are many commercial kits available that can be used to prepare variants. Synthetic gene construction entails in vitro synthesis of a designed polynucleotide molecule to encode a polypeptide of interest. Gene synthesis can be performed utilizing a number of techniques, such as the multiplex microchip-based technology described by Tian et al. (2004, Nature 432: 1050-1054) and similar technologies wherein oligonucleotides are synthesized and assembled upon photo-programmable microfluidic chips.

Single or multiple amino acid substitutions, deletions, and/or insertions can be made and tested using known methods of mutagenesis, recombination, and/or shuffling, followed by a relevant screening procedure, such as those disclosed by Reidhaar-Olson and Sauer, 1988, Science 241: 53-57; Bowie and Sauer, 1989, Proc. Natl. Acad. Sci. USA 86: 2152-2156; WO 95/17413; or WO 95/22625. Other methods that can be used include error-prone PCR, phage display (e.g., Lowman et al., 1991, Biochemistry 30: 10832-10837; U.S. Patent No. 5,223,409; WO 92/06204) and region-directed mutagenesis (Derbyshire et al., 1986, Gene 46: 145; Ner et al., 1988, DNA 7: 127). Mutagenesis/shuffling methods can be combined with high-throughput, automated screening methods to detect activity of cloned, mutagenized polypeptides expressed by host cells (Ness et al., 1999, Nature Biotechnology 17: 893-896). Mutagenized DNA molecules that encode active polypeptides can be recovered from the host cells and rapidly sequenced using standard methods in the art. These methods allow the rapid determination of the importance of individual amino acid residues in a polypeptide. Semi-synthetic gene construction is accomplished by combining aspects of synthetic gene construction, and/or site-directed mutagenesis, and/or random mutagenesis, and/or shuffling. Semi-synthetic construction is typified by a process utilizing polynucleotide fragments that are synthesized, in combination with PCR techniques. Defined regions of genes may thus be synthesized de novo, while other regions may be amplified using site-specific mutagenic primers, while yet other regions may be subjected to error-prone PCR or non-error prone PCR amplification. Polynucleotide subsequences may then be shuffled. The parent may be a fusion polypeptide or cleavable fusion polypeptide in which another polypeptide is fused at the N-terminus or the C-terminus of the polypeptide of the present invention. A fusion polypeptide is produced by fusing a polynucleotide encoding another polypeptide to a polynucleotide of the present invention. Techniques for producing fusion polypeptides are known in the art, and include ligating the coding sequences encoding the polypeptides so that they are in frame and that expression of the fusion polypeptide is under control of the same promoter(s) and terminator. Fusion polypeptides may also be constructed using intein technology in which fusion polypeptides are created post-translationally (Cooper et al., 1993, EMBO J. 12: 2575-2583; Dawson et al., 1994, Science 266: 776-779).

A fusion polypeptide can further comprise a cleavage site between the two polypeptides. Upon secretion of the fusion protein, the site is cleaved releasing the two polypeptides. Examples of cleavage sites include, but are not limited to, the sites disclosed in Martin et al., 2003, J. Ind. Microbiol. Biotechnol. 3: 568-576; Svetina et al., 2000, J. Biotechnol. 76: 245-251; Rasmussen-Wilson et al., 1997, Appl. Environ. Microbiol. 63: 3488-3493; Ward et al., 1995, Biotechnology 13: 498-503; and Contreras et al., 1991, Biotechnology 9: 378-381; Eaton et al., 1986, Biochemistry 25: 505-512; Collins-Racie et al., 1995, Biotechnology 13: 982-987; Carter et al., 1989, Proteins: Structure, Function, and Genetics 6: 240-248; and Stevens, 2003, Drug Discovery World 4: 35-48.

The parent may be obtained from microorganisms of any genus. For purposes of the present invention, the term "obtained from" as used herein in connection with a given source shall mean that the parent encoded by a polynucleotide is produced by the source or by a strain in which the polynucleotide from the source has been inserted. In one aspect, the parent is secreted extracellularly. The parent or in other terms the alpha-amylase having at least 85% sequence identity to SEQ ID NO: 1 may be a bacterial alpha-amylase. For example, the alpha-amylase (parent) may be a Gram-positive

bacterial polypeptide such as a Bacillus, Clostridium, Enterococcus, Geobacillus, Lactobacillus, Lactococcus, Oceanobacillus, Staphylococcus, Streptococcus, or Streptomyces alpha-amylase or a Gram-negative bacterial polypeptide such as a Campylobacter, E. coli, Flavobacterium, Fusobacterium, Helicobacter, Ilyobacter, Neisseria, Pseudomonas, Salmonella, or Ureaplasma alpha-amylase.

In one aspect, the alpha-amylase (parent) is a Bacillus alkalophilus, Bacillus amyloliquefaciens, Bacillus brevis, Bacillus circulans, Bacillus clausii, Bacillus coagulans, Bacillus firmus, Bacillus lautus, Bacillus lentus, Bacillus licheniformis, Bacillus megaterium, Bacillus pumilus, Bacillus stearothermophilus, Bacillus subtilis, or Bacillus thuringiensis alpha-amylase.

In another aspect, the alpha-amylase parent is an artificial alpha-amylase, e.g., the alpha-amylase of SEQ ID NO: 1. It will be understood that for the aforementioned species, the invention encompasses both the perfect and imperfect states, and other taxonomic equivalents, e.g., anamorphs, regardless of the species name by which they are known. Those skilled in the art will readily recognize the identity of appropriate equivalents.

Strains of these species are readily accessible to the public in a number of culture collections, such as the American Type Culture Collection (ATCC), Deutsche Sammlung von Mikroorganismen und Zellkulturen GmbH (DSMZ), Centraalbureau Voor Schimmelcultures (CBS), and Agricultural Research Service Patent Culture Collection, Northern Regional Research Center (NRRL).

The parent may be identified and obtained from other sources including microorganisms isolated from nature (e.g., soil, composts, water, etc.) or DNA samples obtained directly from natural materials (e.g., soil, composts, water, etc.) using the above-mentioned probes. Techniques for isolating microorganisms and DNA directly from natural habitats are well known in the art. A polynucleotide encoding a parent may then be obtained by similarly screening a genomic DNA or cDNA library of another microorganism or mixed DNA sample. Once a polynucleotide encoding a parent has been detected with the probe(s), the polynucleotide can be isolated or cloned by utilizing techniques that are known to those of ordinary skill in the art (see, e.g., Sambrook et al., 1989, supra).

The invention described and claimed herein is not to be limited in scope by the specific aspects herein disclosed, since these aspects are intended as illustrations of several aspects of the invention. Indeed, various modifications of the invention in addition to those shown and described herein will become apparent to those skilled in the art from the foregoing description. In the case of conflict, the present disclosure including definitions will control.

The invention will now be further illustrated by the following, non-limiting examples in which parts and percentages are by weight, unless indicated otherwise.

In the accompanying Figures:

Figure 1 shows the pH profile of alpha amylase having SEQ NO1: with the substitutions G46A+T47I+G105A+I199F when using SEQ ID NO: 1 for numbering.

**Materials and methods**

Preparation of model detergents. Model liquid detergents with different chelators were prepared for testing various amylases. The compositions of the two model detergents are as described below:

| | **Model 1** | **Model 2** |
|---|---|---|
| Component | % w/w | % w/w |
| LAS | 12 | 12 |
| AEOS | 4,9 | 4,9 |
| Soap (cocoa) | 2,75 | 2,75 |
| Soap (soya) | 2,75 | 2,75 |
| AEO N25-7 | 11 | 11 |
| NaOH | 1,75 | 1,75 |
| Ethanol | 3 | 3 |
| MPG | 6 | 6 |
| Glycerol | 1,7 | 1,7 |
| TEA | 3,3 | 3,3 |
| Sodium formate | 1 | 1 |

(continued)

| | Model 1 | Model 2 |
|---|---|---|
| Component | % w/w | % w/w |
| Sodium citrate | 2 | 2 |
| HEDP | 0 | 0,5 |
| PCA (Sokalan CP-5) | 0,18 | 0,18 |
| Ion exchanged water | 34,2 | 34,2 |
| DTMPA | 0,2 | 0 |

PNP-G7 amylase assay

The alpha-amylase activity may be determined by a method employing the PNP-G7 substrate. PNP-G7 which is an abbreviation for 4,6-ethylidene(G7)-p-nitrophenyl(G1)-$\alpha$, D-maltoheptaoside, a blocked oligosaccharide which can be cleaved by an endo-amylase, such as an alpha-amylase. Following the cleavage, the alpha-Glucosidase included in the kit digest the hydrolysed substrate further to liberate a free PNP molecule which has a yellow color and thus can be measured by visible spectophometry at $\lambda$=405nm (400-420 nm). Kits containing PNP-G7 substrate and alpha-Glucosidase is manufactured by Roche (cat. No.11876473). REAGENTS: The G7-PNP substrate from this kit contains 22 mM 4,6-ethylidene-G7-PNP and 52.4 mM HEPES (2-[4-(2-hydroxyethyl)-1-piperazinyl]-ethanesulfonic acid), pH 7.0).

The alpha-Glucosidase reagent contains 52.4 mM HEPES, 87 mM NaCl, 12.6 mM MgCl2, 0.075 mM CaCl2, > 4 kU/L alpha-glucosidase).

The substrate working solution is made by mixing 66 mL of the alpha-Glucosidase reagent with 16 mL of the G7-PNP substrate. This substrate working solution is made immediately before use.

Dilution buffer: 30 mM CaCl2 + 0,0026% BRIJ 35 (Polyoxyethylen-laurylether)

PROCEDURE:

The assay was performed by transferring 40 $\mu$l diluted enzyme samples to 96 well microtiter plate and adding 220 $\mu$l substrate working solution. The solution was mixed and preincubated 15 minute at 37°C and absorption is measured every 20 sec. over 10 minutes at OD 405 nm on a "Spectra max 384 plus" Eliza reader (Molecular devices). The slope (absorbance per minute) of the time dependent absorption-curve is directly proportional to the specific activity (activity per mg enzyme) of the alpha-amylase in question under the given set of conditions.

Assay for measurement of free calcium ions

The following assay may be used for the measurement of free calcium ions in solution, and thus for the determination of chelating agents (chelants) ability to reduce the concentration of free calcium ions (Ca2+) from e.g. 2.0 mM to 0.10 mM at pH 8.

Assay principle:

Various amounts of chelants are added to a solution of 2.0 mM Ca2+ and the free Ca2+ concentration is determined by using a Calcium Ion Selective Electrode at fixed pH and temperature. The concentration of chelant necessary to reduce the concentration of free calcium from 2.0 mM to 0.10 mM can be determined from a plot of the free calcium concentration measured versus the concentration of chelant. In the present assay the concentration of chelant necessary to reduce the concentration of free calcium from 2.0 mM to 0.10 mM is measured at pH 8, at 21°C, in potassium chloride and 49 mM EPPS.

SOLUTIONS:

Electrolyte solution: 4 M potassium chloride in ultrapure water (Milli-Q water). pH 8 buffer: 50 mM EPPS (4-(2-Hydroxyethyl)piperazine-1-propanesulfonic acid) adjusted to pH 8.0 using minimum amounts of 1 N sodium hydroxide. Calcium stock solution: 25 mM Ca2+ in pH 8 buffer, made from CaCl2.2H2O. Chelant stock solution: 15 mM chelant (on a 100 % dry chelator basis) in pH 8 buffer, re-adjusted to pH 8.0 using minimum amounts of 1 M NaOH or 1 M HCl.

Ultra pure water (Milli Q water) is used for preparation of all buffers and solutions.

EQUIPMENT:

Calcium Ion Selective Electrode from Thermo Scientific (cat. No. 9720BNWP) calibrated against a Calcium chloride standard solution. The electrode is calibrated as described by the guidelines following the electrode.

PROCEDURE:

A series of vials are prepared, each containing 4 mL of the calcium stock solution (final concentration 2.0 mM), 1 mL electrolyte solution (final concentration 80 mM potassium chloride), chelant stock solution in various amounts (0 - 45 mL) and using the pH 8 buffer for adjusting the total volume to 50 mL. The final concentration of EPPS in the assay is 49 mM. After mixing, the concentration of free Ca2+ is measured by the calcium electrode. The free calcium concentration should be determined at a sufficient number of different chelant concentrations for each chelant tested, ensuring that the data set covers the entire range from 2.0 mM free calcium ions to a value below 0.10 mM or the final chelant concentration in the assay is higher than 10.0 mM. A suitable number of data points are 8 or more. The chelant concentration required to lower the initial 2.0 mM free calcium ions to 0.10 mM is obtained from a plot of the measured free calcium ion concentration versus chelator concentration by interpolation.

The solutions are equilibrated to the desired temperature, which in the present assay is 21°C.

Determination of logK

Chelating agents can also be characterized by the binding constant of the chelating agent (chelator) and calcium ions. This constant can be determined by ITC (isothermal titration calorimetry) as described by AD Nielsen, CC Fuglsang and P Westh, Analytical Biochemistry Vol. 314 (2003) page 227-234 and T Wiseman, S Williston, JF Brandts and L-N Lin, Analytical Biochemistry Vol. 179 (1989) page 131-137.

All glassware and plastic bottles used are washed with a 1 % (w/w) EDTA solution and subsequently rinsed thoroughly in Chelex 100 treated ultrapure water (Milli-Q water). Solutions are stored in plastic bottles and kept at 5°C until use. BUFFERS:
20 mM HEPES (2-[4-(2-hydroxyethyl)-1-piperazinyl]-ethanesulfonic acid), pH 8 prepared with ultrapure water (Milli-Q water) 20 mM glycine, pH 10 prepared with ultrapure water (Milli-Q water).

SOLUTIONS:

- 125 μM chelant in 20 mM HEPES, pH 8 or 125 μM chelant in 20 mM glycine, pH 10
- 4 mM CaCl2 in 20 mM HEPES, pH 8 or 4 mM CaCl2 in 20 mM glycine, pH 10
- Ultrapure water (Milli-Q water)

All buffers are passed through Chelex 100 columns (Sigma Aldrich C-7901, matrix 1% crosslinked polystyrene matrix active group iminodiacetic acid (sodium form) matrix attachment through methyl group to aromatic rings) to remove calcium ions. All solutions are degassed by stirring under vacuum before the experiments. INSTRUMENT:
MCS-ITC (MicroCal Inc., Northampton, MA, USA)

PROCEDURE:

The reference cell is filled with ultrapure water (Milli-Q water). The sample cell is filled with the chelant solution at the selected pH and the syringe is filled with the calcium solution at the selected pH. The solutions are equilibrated to the desired temperature, e.g. 19°C. The chelator solution in the sample cell is then titrated with 30-40 aliquots of 8 μL of the calcium solution.

The obtained signals from the ITC are then integrated using the Origin software supplied by MicroCal Inc. To obtain the binding isotherms, regression routines are made using the same software package. These data are then fitted to a model using the routines embedded in the Origin software. Presently preferred is the "OneSites" model which gives the best fit for most of the commonly used chelating agents, i.e. the residuals are evenly distributed around zero. From the K value the log K is calculated as the logarithm (base 10) of the K value.

Assays for determining wash performance

Terq-O-tometer (TOM) wash assay

The wash performance test using Terg-O-Tometer is an assay in a medium scale model of a washing machine and used to evaluate the washing performance of amylases. A TOM is basically a large temperature controlled water bath with up to 12 open metal beakers submerged into it. Each beaker constitutes one small washing machine and during an experiment, each of them will contain a solution of a specific detergent/enzyme system and the soiled and unsoiled fabrics its performance is tested on. Mechanical stress is achieved by a rotating stirring arm, which stirs the liquid within each beaker. Because the TOM beakers have no lid, it is possible to withdraw samples during a TOM experiment and assay for information on-line during wash. The TOM wash performance test, using 1000 mL beakers and a paddle stirrer providing oscillating rotational motion, 180° in each direction, with a frequency of 120 per minute, comprises the following steps: 500 mL wash solution (15 °dH with a Ca/Mg ratio of 4:1 containing 40 mM NaHCO3) added to the beakers. When the selected temperature for washing, e.g. 40°C, is reached detergent and enzyme is added to wash solution. During wash the detergent concentration should be 3.3 g detergent per L wash solution (3.3 g/L e.g. model detergent 1 or 2 as described above). The enzyme concentration during wash should either be 0 and/or 0.028 mg enzyme protein/L wash solution. 10 g of prewashed ballast cut in 5*5 cm WFK80A (wfk Testgewebe GmbH, Christenfeld 10; D-41379 Brüggen-Bracht; Germany) are added along with four cotton rice starch swatches of 5x5 cm, e.g. CS-28 (Center For Testmaterials BV, P.O. Box 120, 3133 KT, Vlaardingen, The Netherlands), to the wash solution to start the wash. After the selected wash time, e.g. 20 minutes, the wash is stopped and the swatches immediately rinsed for 5 minutes under cold running tab water. The rinsed swatches are subsequently dried in the dark. After drying the wash performance is evaluated by measuring the remission of incident light at 460 nm using Color Eye as described below. The test with 0 mg enzyme protein/L is used as a blank to obtain a delta remission value.

Color Eve measurement

Wash performance is expressed as a delta remission value (∆Rem). Light remission evaluations of the swatches were done using a Macbeth Color Eye 7000 remission spectrophotometer with a large circular aperture (25 mm diameter). The measurements were made without UV in the incident light and remission at 460 nm was extracted. The swatch to be measured was placed on top of the three other swatches, of the same type washed under identical conditions, before being measured to reduce reflection from the piston pushing the swatch up against the measuring opening. Delta remission values for a given wash condition were calculated by subtracting the average remission value of the swatches washed without added amylase (0 mg enzyme protein/L) from the remission value of the swatches washed with amylase (0.028 mg enzyme protein/L).

Automatic Mechanical Stress Assay (AMSA) for laundry

Another wash performance test that may be used is the AMSA. In order to assess the wash performance in laundry, washing experiments may be performed using the Automatic Mechanical Stress Assay (AMSA). With the AMSA, the wash performance of many small volume enzyme-detergent solutions can be examined. The AMSA plate has a number of slots for test solutions and a lid that firmly squeezes the textile to be washed against the slot openings. During the wash, the plate, test solutions, textile and lid are vigorously shaken to bring the test solution in contact with the textile and apply mechanical stress in a regular, periodic, oscillating manner. For further description see WO02/42740, especially the paragraph "Special method embodiments" at page 23-24.

| | |
|---|---|
| Detergent dosage | 5 g/L (liquid detergent) |
| Test solution volume | 160 micro L |
| pH | Adjusted to pH 7 or pH 6 (liquid detergent) |
| Wash time | 20 minutes |
| Temperature | 60°C, 40°C and 20°C or 15°C |
| Water hardness | 15°dH |

Model detergents and test materials may be as follows:

| | |
|---|---|
| Laundry liquid model detergent | Sodium alkylethoxy sulfate (C-9-15, 2EO) 6.0%<br>Sodium dodecyl benzene sulfonate 3.0%<br>Sodium toluene sulfonate 3.0%<br>Oleic acid 2.0%<br>Primary alcohol ethoxylate (C12-15, 7EO) 3.0%<br>Primary alcohol ethoxylate (C12-15, 3EO) 2.5%<br>Ethanol 0.5%<br>Monopropylene glycol 2.0%<br>Tri-sodium citrate dihydrate 4.0%<br>Triethanolamine 0.4%<br>De-ionized water ad 100%<br>pH adjusted to 8.5 with NaOH |
| Test material | EMPA112 (Cocoa on cotton)<br>PC-05 (Blood/milk/ink on cotton/polyester)<br>WFK10PPM (Vegetable oil/milk/pigment on cotton)<br>C-10 (Oil/milk/pigment on cotton)<br>CS-28 (rice starch on cotton) |

Test materials are obtained from EMPA Testmaterials AG, Mövenstrasse 12, CH-9015 St. Gallen, Switzerland, from Center For Testmaterials BV, P.O. Box 120, 3133 KT Vlaardingen, the Netherlands, and WFK Testgewebe GmbH, Christenfeld 10, D-41379 Brüggen, Germany. Water hardness is adjusted to 15°dH by addition of CaCl2, MgCl2, and NaHCO3 Ca2+:Mg2+ = 4:1:7.5) to the test system. After washing the textiles are flushed in tap water and dried. The wash performance is measured as the brightness of the colour of the textile washed. Brightness can also be expressed as the intensity of the light reflected from the sample when illuminated with white light. When the sample is stained the intensity of the reflected light is lower than that of a clean sample. Therefore, the intensity of the reflected light can be used to measure wash performance. Colour measurements are made with a professional flatbed scanner (Kodak iQsmart, Kodak, Midtager 29, DK-2605 Brøndby, Denmark), which is used to capture an image of the washed textile.

To extract a value for the light intensity from the scanned images, 24-bit pixel values from the image are converted into values for red, green and blue (RGB). The intensity value (Int) is calculated by adding the RGB values together as vectors and then taking the length of the resulting vector:

$$Int=\sqrt{r^2+g^2+b^2}$$

**Example 1 - Determination of pH Profile.**

The pH Profile was determined for the alpha amylase having SEQ NO1: with the substitutions G46A+T47I+G105A+I199F when using SEQ ID NO: 1 for numbering.

Reducing sugar assay:

Assays for measurement of amylolytic activity (alpha-amylase activity).
The alpha-amylase activity may be determined by a method employing starch substrate like rice starch S7260 from Sigma-Aldrich. The alpha-amylase cleaves the substrate and the reduced end formed by the amylase is determined by reaction with p-Hydroxybenzoic acid hydrazid (reducing sugar assay). This results in formation of hydrazone, which can be detected by absorbance measurement at 405nm. The number of reducing ends formed is proportional to the amylase activity.

The enzyme is diluted in enzyme dilution buffer (10 mM MES, pH7.0, 0.01% TritonX100, 0.100mM CaCl2) to an enzyme concentration where a linear dose-response curve is obtained in the assay. The pH activity is determined using activity buffers (50mM MES, 50 mM acetic acid, 50 mM Glycine) adjusted to pH4-11. The substrate (S7260 from Sigma-Aldrich) (3mg/ml in milliQ water) is cooked for 5 minutes and cooled down before use. For assay transfer 50μl substrate (3mg/ml) to PCR-microtiter plate and add 50μl activity buffer (50mM MES, 50 mM acetic acid, 50 mM Glycine, pH4-11). Add 50μl of diluted enzyme and mix. Incubate in PCR machine for 5 minutes at 40°C followed by cooling down.

Make stop solution by dissolving p-Hydroxybenzoic acid hydrazid (Sigma H-9882) in Ka-Na-tartrate/NaOH solution (for 1 Liter: add 50g K-Na-tartrate (Merck 8087) and 20g NaOH) to 15mg/ml. Add 75μl stop solution and incubate 10 minutes at 95°C in PCR machine. Transfer 150μl to new 96-Microtiter plate and measure absorbance at 405nm. The enzyme should be diluted so it is within the linear range of the activity assay at the given pH. The amylase activity is normalized to the maximum activity.

The pH profile of alpha amylase having SEQ NO1: with the substitutions G46A+T47I+G105A+I199F when using SEQ ID NO: 1 for numbering was determined and the result is shown in Figure 1. It can be seen that the maximum activity is reached between pH 6 and 7 and the activity drops markedly in the alkaline region, so that the enzyme does not seem to be especially attractive for use in alkaline liquid detergents. The present inventors have found that the extraordinary stability of the alpha-amylase enzyme (see below) more than compensates the lower activity in liquid detergents having alkaline pH values.

In the following Examples, the abbreviated component identifications have the following meanings:

MPG is mono propylene glycol
TEA is triethanolamine
MEA is Monoethanolamine
NaOH is 47% sodium hydroxide solution
NI 7EO is C12-15 alcohol ethoxylate 7EO nonionic Neodol® 25-7 (ex Shell Chemicals)
LAS acid is C12-14 linear alkylbenzene sulphonic acid
Prifac® 5908 is saturated lauric fatty acid ex Croda
SLES 3EO is sodium lauryl ether sulphate with 3 moles EO
SLES 1EO is sodium lauryl ether sulphate with 1 mole EO
EPEI is Sokalan HP20 - ethoxylated polyethylene imine cleaning polymer: PEI(600) 20EO ex BASF
Perfume is free oil perfume
Dequest®2010 is HEDP (1-Hydroxyethylidene-1,1,-diphosphonic acid)
Preservative is Proxel GXL antimicrobial preservative, a 20% solution of 1,2 benzisothiazolin-3-one in dipropylene glycol and water ex Arch Biocides
Fluorescer is Tinopal™ CBS-X ex Ciba
Stainzyme™, Termamyl Ultra™, Savinase Ultra XL™, Mannaway™ are commercial enzymes ex Novozymes

**Example 2: Amylase storage stability in liquid detergents.**

A series of liquid detergent compositions was formulated with prior art amylases (Stainzyme and Termamyl Ultra) and the amylase of SEQ ID NO: 1 with the substitutions G46A+T47I+G105A+I199F (which is the amylase SEQ ID NO: 2). The compositions used are given in Table 1. The detergent enzyme samples were put into glass vials, and the glass vials were subsequently closed. The detergent enzyme samples were incubated for 2 and 4 weeks at 37°C or at 45°C and an identical set of samples were frozen to represent fresh samples. After storage the residual amylase activity was subsequently measured using the PNP-G7 amylase activity assay. The amylases that were tested are Termamyl Ultra, Stainzyme (Novozymes A/S; Krogshoejvej 36; 2880 Bagsvaerd; Denmark) and the amylase of SEQ ID NO:2.

Table 1 - Liquid detergent compositions

| | Compositions Wt % as 100% | | | | | | |
|---|---|---|---|---|---|---|---|
| Ingredient | %AD | A | B | C | D | E | F |
| Demin water | 100 | balance | balance | balance | balance | balance | balance |
| MPG | 100 | 5 | 5 | 5 | 5 | 1,1 | 0 |
| Glycerol | 100 | 0 | 0 | 2,2 | 2,2 | 4,5 | 2,2 |
| MEA | 100 | 3,21 | 3,95 | 2,83 | 3,66 | 0 | 0 |
| TEA | 100 | 1,87 | 1,87 | 1,5 | 1,5 | 4,08 | 1,5 |
| NaOH | 47 | 0 | 0 | 0 | 0 | 1,81 | 1,56 |

(continued)

| | Compositions Wt % as 100% | | | | | | |
|---|---|---|---|---|---|---|---|
| Ingredient | **%AD** | **A** | **B** | **C** | **D** | **E** | **F** |
| NI7EO | 100 | 3,92 | 3,92 | 1,16 | 1,16 | 3,31 | 1,16 |
| LAS Acid | 97,1 | 5,23 | 5,23 | 4,63 | 4,63 | 13,23 | 4,63 |
| Prifac 5908 | 100 | 1,63 | 1,63 | 0 | 0 | 0 | 0 |
| SLES 3EO | 70 | 3,92 | 3,92 | 0 | 0 | 0 | 0 |
| SLES 1EO | 70 | 0 | 0 | 5,79 | 5,79 | 16,54 | 5,79 |
| EPEI | 80 | 1,4 | 1,4 | 0 | 0 | 0 | 0 |
| Dequest 2010 | 60 | 0 | 0,7 | 0 | 0,7 | 0 | 0 |
| Citric Acid | 50 | 1,17 | 1,17 | 2 | 2 | 1,25 | 2 |
| Sodium Sulfite | 98 | 0,12 | 0,12 | 0 | 0 | 0 | 0 |
| Preservative | 20 | 0,02 | 0,02 | 0,03 | 0,03 | 0,03 | 0,03 |
| Fluorescer | 100 | 0,12 | 0,12 | 0,1 | 0,1 | 0,09 | 0,03 |
| Perfume | 100 | 0,65 | 0,65 | 0,34 | 0,34 | 0,98 | 0,34 |
| Amylase SEQ ID NO: 2 (14.6 mg active/g) | 100 | 0 - 0.2 | 0 - 0.2 | 0 - 0.2 | 0 - 0.2 | 0 - 0.3 | 0 - 0.11 |
| Stainzyme (13.7 mg active/g) | 100 | 0 - 0.2 | 0 - 0.2 | 0 - 0.2 | 0 - 0.2 | 0 - 0.3 | 0 - 0.11 |
| Termamyl Ultra (24.8 mg active/g) | 100 | 0 - 0.2 | 0 - 0.2 | 0 - 0.2 | 0 - 0.2 | 0 | 0 |
| Savinase Ultra XL (48 mg active/g) | 100 | 0 | 0 | 0 | 0 | 1 | 0,35 |
| Mannaway (4.4 mg active/g) | 100 | 0 | 0 | 0 | 0 | 0,3 | 0,11 |
| Total | 100 | 100 | 100 | 100 | 100 | 100 | 100 |
| pH @ 25°C | | 8,5 | 8,5 | 8,5 | 8,5 | 8,2 | 8,2 |

Table 2

| | Residual activity, 37°C | | | | | |
|---|---|---|---|---|---|---|
| | **mylase SEQ ID NO**: | | **Termamyl Ultra** | | **Stainzyme** | |
| | 2 Weeks | 4 Weeks | 2 Weeks | 4 Weeks | 2 Weeks | 4 Weeks |
| Detergent A | 82 | 69 | 29 | 10 | 5 | 1 |
| Detergent B | 90 | 80 | 83 | 61 | 50 | 25 |
| Detergent C | 89 | 83 | 38 | 16 | 7 | 1 |
| Detergent D | 92 | 78 | 71 | 46 | 37 | 15 |

Table 3

| | Residual activity, 45°C | | | | | |
|---|---|---|---|---|---|---|
| | **mylase SEQ ID NO:** | | **Termamyl Ultra** | | **Stainzyme** | |
| | 2 Weeks | 4 Weeks | 2 Weeks | 4 Weeks | 2 Weeks | 4 Weeks |
| Detergent A | 60 | 40 | 0 | 0 | 0 | 0 |
| Detergent B | 79 | 69 | 36 | 17 | 4 | 1 |

(continued)

| | Residual activity, 45°C | | | | | |
|---|---|---|---|---|---|---|
| | **mylase SEQ ID NO:** | | **Termamyl Ultra** | | **Stainzyme** | |
| | 2 Weeks | 4 Weeks | 2 Weeks | 4 Weeks | 2 Weeks | 4 Weeks |
| Detergent C | 70 | 53 | 2 | 0 | 0 | 0 |
| Detergent D | 77 | 72 | 21 | 5 | 2 | 1 |

Table 4

| | **Residual activity, 37°C** | | | | **Residual activity, 45°C** | | | |
|---|---|---|---|---|---|---|---|---|
| | **Amylase SEQ ID NO:** 2 | | **Stainzyme** | | **Amylase SEQ ID NO: 2** | | **Stainzyme** | |
| | 2 Weeks | 4 Weeks | 2 Weeks | 4 Weeks | 2 Weeks | 4 Weeks | 2 Weeks | 4 Weeks |
| Detergent E | 100 | 100 | 82 | 69 | 99 | 96 | 49 | 30 |
| Detergent F | 96 | 96 | 66 | 36 | 89 | 82 | 10 | 0 |

Under the tested conditions, it is clear that the amylase of SEQ ID NO: 1 with the substitutions G46A+T47I+G105A+I199F (which is the amylase SEQ ID NO: 2) is significantly more stable than Termamyl Ultra™ and Stainzyme™ in all detergent samples.

**Example 3:** Storage stability in liquid detergents.

The tested amylases were added to detergents in order to reach a final protein concentration of 0,084 mg EP/g. 5 gram detergent samples with the amylase in question were placed in closed glass vials for 1 week at 40°C or 2 weeks at 37°C. Amylase activity was measured according to the PNP-G7 amylase assay described above. Residual activities of amylases were calculated by comparison to a reference sample stored for 1 and 2 weeks at -18°C.

Table 5

| 1 week at 40°C | SEQ NO1: G46A+T47I+G105A+I199F | SEQ NO1: | Termamyl |
|---|---|---|---|
| Model 1 | 96% | 100% | 30% |
| Model 2 | 94% | 84% | 16% |

Table 6

| 2 weeks at 37°C | SEQ NO1: G46A+T47I+G105A+I199F | SEQ NO1: | Termamyl |
|---|---|---|---|
| Model 1 | 93% | 95% | 38% |
| Model 2 | 93% | 85% | 18% |

From this example, it is clear that the amylase of SEQ ID NO: 1 has good storage stability in Model 1, but significantly loses activity in detergent model 2; already after one week's storage at 40°C. It is also clear that the amylase of SEQ ID NO: 1 having the substitutions of G46A+T47I+G105A+I199F has high stability in both detergent model 1 and 2. Thus, this amylase of SEQ ID NO: 1 having the substitutions of G46A+T47I+G105A+I199F is stable in model 2 which contains a higher concentration of a chelating agent compared to model 1. Termamyl is not stable in these two model detergents.

**Example 4: Residual amylase wash performance after storage in detergent.**

Detergent enzyme sample preparation

Detergent enzyme samples containing 0.084 mg amylase enzyme protein/g detergent, e.g. detergent model 1 or 2, were put into glass vials, and the glass vials were subsequently closed. The detergent enzyme samples were incubated for 1 week at 40°C or for 2 at 37°C and an identical set of samples were frozen to represent fresh samples. After storage the wash performance was subsequently determined in Terg-O-Tometer of both the frozen and incubated samples. The amylases that were tested are Termamyl (Novozymes A/S; Krogshoejvej 36; 2880 Bagsvaerd; Denmark), the amylase of SEQ ID NO: 1, and the amylase of SEQ ID NO: 1 with the following substitutions G46A+T47I+G105A+I199F.

Test of wash performance in Terg-O-Tometer

After storage the wash performance of the Termamyl, the amylase of SEQ ID NO: 1, and the amylase of SEQ ID NO: 1 with the following substitutions G46A+T47I+G105A+I199F was evaluated in Terg-O-Tometer under the experimental conditions described below:

Table 7

| | |
|---|---|
| Detergent concentration during wash | 3.3 g/L |
| Wash temperature | 40°C |
| Wash time | 20 minutes |
| Water hardness of wash solution | 15°dH (4:1 Ca/Mg ratio with 40 mM NaHCO3) |
| Oscillations per minute | 120 |
| pH | As is |
| Enzyme concentration in test solution | 0; 0.028 mg EP/L |
| Test solution volume | 500 mL |
| Textile per beaker | 4 cotton with rice starch swatches (CS-28, 5*5 cm) and 10 g cotton Ballast (WFK 80A, 5*5 cm) |

To obtain the final 3.3 g detergent per L wash solution, 1.485 g of detergent (e.g. Model 1 or 2) was added in 500 mL wash solution with a water hardness of 15°dH, subsequently 0.165 g of the amylase/detergent sample to be investigated for wash performance was added. The detergent concentration is now 3.3 g detergent per L wash solution, and the amylase concentration 0.028 mg enzyme protein per L wash solution.

10 g of prewashed ballast cut in 5*5 cm WFK80A (wfk Testgewebe GmbH, Christenfeld 10; D-41379 Brüggen-Bracht; Germany) were added along with four swatches of 5x5 cm CS-28 (Center For Testmaterials BV, P.O. Box 120, 3133 KT, Vlaardingen, The Netherlands) to the wash solution to start the wash. After 20 minutes' wash at 40°C, the wash was stopped and the CS-28 swatches were immediately rinsed for 5 minutes in running cold tab water. After drying the remission values of the CS-28 swatches were measured using a Macbeth Color Eye 7000 remission spectrophotometer. The wash performance (ΔRem) after incubation was obtained and used to calculate the residual wash performance shown as a ratio between the wash performance of Termamyl, the amylase of SEQ ID NO:1, and the amylase of SEQ ID NO:1 with the following substitutions G46A+T47I+G105A+I199F. The wash performance (ΔRem) after incubation of the amylase of SEQ ID NO:1 was set to 100% (table 2.1 & 2.2). In addition the residual wash performance of the individual amylase was calculated by dividing the average wash performance (ΔRem) of the stored sample with the average wash performance (ΔRem) of the identical frozen sample (Tables 8 & 9).

Table 8: Residual wash performance ratio after 1 week's storage at 40°C of Termamyl, the amylase of SEQ ID NO:1, and the amylase of SEQ ID NO:1 with the following substitutions G46A+T47I+G105A+I199F. With the Residual wash performance of the amylase of SEQ ID NO: 1 set to 100% in each detergent.

Table 8

| 1 week at 40°C | Model detergent 1 | Model detergent 2 |
|---|---|---|
| Termamyl | 24% | 20% |

(continued)

| 1 week at 40°C | Model detergent 1 | Model detergent 2 |
|---|---|---|
| Amylase SEQ ID NO:1 | 100% | 100% |
| Amylase SEQ ID NO:1 with G46A+T47I+G105A+I199F | 83% | 119% |

From these results, it is evident that the residual wash performance of the amylase of SEQ ID NO: 1 with the following substitutions G46A+T47I+G105A+I199F washes better after 1 week storage compared to the amylase of SEQ ID NO: 1 when using model detergent 2. When using model detergent 1 the amylase of SEQ ID NO: 1 has the highest residual wash performance after storage. This difference is believed to be due to the higher concentration of chelating agents in model 2 versus model 1. Thus, the amylase of SEQ ID NO: 1 with the following substitutions G46A+T47I+G105A+I199F has good wash performance after storage in detergents comprising high amounts of chelating agents.

Table 9: Residual wash performance ratio after 2 weeks storage at 37°C of Termamyl, the amylase of SEQ ID NO:1, and the amylase of SEQ ID NO:1 with the following substitutions G46A+T47I+G105A+I199F. With the Residual wash performance of the amylase of SEQ ID NO: 1 set to 100%.

Table 9

| 2 weeks at 37°C | Model detergent 1 | Model detergent 2 |
|---|---|---|
| Termamyl | 34% | 3% |
| Amylase SEQ ID NO:1 | 100% | 100% |
| Amylase SEQ ID NO:1 with G46A+T47I+G105A+I199F | 103% | 138% |

These results after 2 weeks' storage at 37°C confirm the results after 1 week storage.

Table 10: Individual residual wash performance after 1 week's storage at 40°C of Termamyl, the amylase of SEQ ID NO:1, and the amylase of SEQ ID NO:1 with the following substitutions G46A+T47I+G105A+I199F.

Table 10

| 1 week at 40°C | Model detergent 1 | Model detergent 2 |
|---|---|---|
| Termamyl | 47% | 34% |
| Amylase SEQ ID NO:1 | 96% | 71% |
| Amylase SEQ ID NO:1 with G46A+T47I+G105A+I199F | 107% | 108% |

These results show the wash performance of the amylases in the two detergents compared to the frozen samples of the amylases. Thus, the frozen samples are set to 100%. From this it can be seen that the amylase of SEQ ID NO: 1 loses wash performance in model 2 whereas this is not the case for the amylase of SEQ ID NO: 1 with the substitutions G46A+T47I+G105A+I199F.

Table 11: Individual residual wash performance after 2 weeks' storage at 37°C of Termamyl, the amylase of SEQ ID NO:1, and the amylase of SEQ ID NO:1 with the following substitutions G46A+T47I+G105A+I199F.

Table 11

| 2 weeks at 37°C | Model detergent 1 | Model detergent 2 |
|---|---|---|
| Termamyl | 67% | 5% |
| Amylase SEQ ID NO:1 | 75% | 61% |
| Amylase SEQ ID NO:1 with G46A+T47I+G105A+I199F | 90% | 102% |

Under the tested conditions, it is clear that the amylase of SEQ ID NO: 1 is more stable than Termamyl, and that the substitutions (G46A+T47I+G105A+I199F) give the amylase of SEQ ID NO:1 improved stability and improved wash performance in model detergent 2.

**Example 5: Characterization of chelating agents**

Example 5a - Measure of free calcium ions.

Chelating agents (chelants) may be ranked by their ability to reduce the concentration of free calcium ions (Ca2+) from 2.0 mM to 0.10 mM at pH 8 developed from a method described by M.K.Nagarajan et al., JAOCS, Vol. 61, no. 9 (September 1984), pp. 1475-1478. The assay described above under "Materials and Methods" for measuring of free calcium ions was used. Accordingly, the concentration of chelant necessary to reduce the water hardness from 2.0 mM to 0.10 mM was determined as described above. The experiment was carried out with the pH 8 buffer at 21 °C. The final concentrations of chelant used and the free Ca2+ concentration measured are shown in table 3.1 below.

Table 12.1: Concentration of free Ca2+ determined in a mixture of 2.0 mM Ca2+ and various amounts of chelating agent at pH 8.

| mL Calcium stock solution | mL electrolyte solution | mL pH 8 buffer | mL chelant | mM chelant final concentration |
|---|---|---|---|---|
| 4 | 1 | 45.0 | 0.0 | 0.00 |
| 4 | 1 | 44.0 | 1.0 | 0.30 |
| 4 | 1 | 43.0 | 2.0 | 0.60 |
| 4 | 1 | 41.0 | 4.0 | 1.20 |
| 4 | 1 | 39.0 | 6.0 | 1.80 |
| 4 | 1 | 38.5 | 6.5 | 1.95 |
| 4 | 1 | 38.0 | 7.0 | 2.10 |
| 4 | 1 | 37.5 | 7.5 | 2.25 |
| 4 | 1 | 37.0 | 8.0 | 2.40 |
| 4 | 1 | 36.5 | 8.5 | 2.55 |
| 4 | 1 | 36.0 | 9.0 | 2.70 |
| 4 | 1 | 35.5 | 9.5 | 2.85 |
| 4 | 1 | 35.0 | 10.0 | 3.00 |
| 4 | 1 | 32.5 | 12.5 | 3.75 |
| 4 | 1 | 30.0 | 15.0 | 4.50 |
| 4 | 1 | 25.0 | 20.0 | 6.00 |
| 4 | 1 | 20.0 | 25.0 | 7.50 |
| 4 | 1 | 15.0 | 30.0 | 9.00 |
| 4 | 1 | 10.0 | 35.0 | 10.50 |

From these data, the concentration of chelating agent necessary to reduce the free Ca2+ concentration from 2.0 mM to below 0.10 mM was determined by interpolation. A number of chelants were characterized using this assay, and the chelator concentrations necessary to reduce the concentration of free calcium ions from 2.0 mM to 0.10 mM at pH 8.0 in 49 mM EPPS buffer and 80 mM potassium chloride are shown below in Table 12.2. This table can thus also be used for comparing the capabilities of the chelating agents for reducing the concentration of free calcium ions. Table 12.2

| | mM | Relative to citrate |
|---|---|---|
| Citrate | 8.36 | 1.00 |
| EGTA | 2.60 | 0.33 |
| EDTA | 1.90 | 0.21 |

(continued)

| | mM | Relative to citrate |
|---|---|---|
| HEDP | 1.60 | 0.20 |
| DTPA | 1.87 | 0.24 |
| DTMPA | 1.17 | 0.25 |
| MGDA | 2.56 | 0.33 |

Example 5b - Determination of log K

Alternatively, the chelating agents can be characterized by the binding constant of the chelating agent (chelator) and calcium ions. This constant can be determined by ITC (isothermal titration calorimetry) as described by AD Nielsen, CC Fuglsang and P Westh, Analytical Biochemistry Vol. 314 (2003) page 227-234 and T Wiseman, S Williston, JF Brandts and L-N Lin, Analytical Biochemistry Vol. 179 (1989) page 131-137. The procedure for the determination of log K is described in detail above under "Materials and Methods". Using this procedure for determination of log K, the following log K values for several chelating agents were determined at pH 10 (Table 12.3).

Table 12.3

| | Log K | Log K relative to log K for citrate |
|---|---|---|
| Citrate | 3 | 1.00 |
| EGTA | 9 | 3.0 |
| EDTA | 8 | 2.7 |
| HEDP | 6 | 2.0 |
| DTPA | 7 | 2.7 |
| MGDA | 2.56 | 0.33 |

## Claims

1. Liquid detergent composition comprising:

   a) at least 5 wt.% water,
   b) at least 3 wt.% of a surfactant system comprising 10 to 100% by weight of the surfactant system of an anionic surfactant,
   c) an alpha-amylase having at least 95% sequence identity to SEQ ID NO: 1 and said alpha-amylase comprising the substitutions G46A+T47I+G105A+I199F when using SEQ ID NO: 1 for numbering;

   wherein the detergent further comprises a chelating agent; and wherein the chelating agent is HEDP or another chelating agent having equal or higher chelating capability than HEDP under identical conditions, where said HEDP or another chelating agent is present at a concentration of at least 0.25 wt.%.

2. Liquid detergent according to claim 1, wherein the surfactant system comprises 0 to 85% by weight of the surfactant system of linear alkylbenzene sulphonate (LAS).

3. Liquid detergent according to claim 2, wherein the surfactant system comprises 10 to 75% by weight of the surfactant system of linear alkylbenzene sulphonate (LAS).

4. Liquid detergent according to claim 1, wherein the surfactant system comprises 0 to 90% by weight of the surfactant system of alcohol ethersulfate, preferably sodium lauryl ether sulfate (SLES).

5. Liquid detergent according to any of the above claims, further comprising 0 to 60% by weight of the surfactant system of a non-ionic surfactant.

6. Liquid detergent according to any of the above claims, comprising from 5 to 75% by weight of the surfactant system of linear alkylbenzene sulphonate (LAS), from 5 to 90% by weight of the surfactant system of sodium lauryl ether sulfate (SLES) and from 5 to 60% by weight of the surfactant system of a non-ionic surfactant.

7. Liquid detergent according to any of the above claims, wherein the alpha-amylase has the sequence of SEQ ID NO: 1 with the following substitutions: G46A+T47I+G105A+I199F.

8. Liquid detergent according to any of the above claims, having a pH of at least 8.

9. Use of an alpha-amylase in a liquid detergent according to claim 1, said amylase having at least 95%, at least 96%, at least 97%, at least 98%, at least 99% but less than 100% sequence identity to the alpha-amylase of SEQ ID NO: 1 and said alpha-amylase comprising the substitutions G46A+T47I+G105A+I199F when using SEQ ID NO: 1 for numbering.

10. Use of an alpha-amylase in a liquid detergent according to claim 9 for laundry, preferably at temperatures of 40°C or less, or more preferably at a temperature of 30°C or less or even more preferred at a temperature of 20°C or less.

11. A process of laundering fabrics, comprising laundering a fabric with a liquid detergent composition according to any of claims 1-8, preferably at a temperature of 40°C or less, or more preferably at a temperature of 30°C or less or even more preferably at a temperature of 20°C or less.

## Patentansprüche

1. Flüssige Reinigungsmittelzusammensetzung, umfassend:

   a) mindestens 5 Gew.-% Wasser,
   b) mindestens 3 Gew.-% eines Tensidsystems, umfassend, bezogen auf das Gewicht des Tensidsystems, 10 bis 100% von einem anionischen Tensid,
   c) eine alpha-Amylase, die mindestens 95% Sequenzidentität zu SEQ ID NO: 1 aufweist und wobei die alpha-Amylase die Substitutionen G46A + T47I + G105A + I199F umfasst, wenn SEQ ID NO: 1 zur Nummerierung verwendet wird,

   wobei das Reinigungsmittel ferner einen Chelatbildner umfasst; und wobei der Chelatbildner HEDP oder ein anderer Chelatbildner, der unter identischen Bedingungen eine gleiche oder höhere chelatbildende Fähigkeit als HEDP aufweist, ist, wobei das HEDP oder ein anderer Chelatbildner in einer Konzentration von mindestens 0,25 Gew.-% vorliegt.

2. Flüssiges Reinigungsmittel nach Anspruch 1, wobei das Tensidsystem, bezogen auf das Gewicht des Tensidsystems, 0 bis 85% lineares Alkylbenzolsulfonat (LAS) umfasst.

3. Flüssiges Reinigungsmittel nach Anspruch 2, wobei das Tensidsystem, bezogen auf das Gewicht des Tensidsystems, 10 bis 75% lineares Alkylbenzolsulfonat (LAS) umfasst.

4. Flüssiges Reinigungsmittel nach Anspruch 1, wobei das Tensidsystem, bezogen auf das Gewicht des Tensidsystems, 0 bis 90% Alkoholethersulfat, bevorzugt Natriumlaurylethersulfat (SLES) umfasst.

5. Flüssiges Reinigungsmittel nach irgendeinem der vorherigen Ansprüche, ferner umfassend, bezogen auf das Gewicht des Tensidsystems, 0 bis 60% eines nichtionischen Tensids.

6. Flüssiges Reinigungsmittel nach irgendeinem der vorherigen Ansprüche, umfassend, bezogen auf das Gewicht des Tensidsystems, 5 bis 75% lineares Alkylbenzolsulfonat (LAS), 5 bis 90% Natriumlaurylethersulfat (SLES) und 5 bis 60% eines nichtionischen Tensids.

7. Flüssiges Reinigungsmittel nach irgendeinem der vorherigen Ansprüche, wobei die alpha-Amylase die Sequenz von SEQ ID NO: 1 mit den folgenden Substitutionen aufweist: G46A + T47I + G105A + I199F.

8. Flüssiges Reinigungsmittel nach irgendeinem der vorherigen Ansprüche mit einem pH von mindestens 8.

**9.** Verwendung einer alpha-Amylase in einem flüssigen Reinigungsmittel nach Anspruch 1, wobei die Amylase mindestens 95%, mindestens 96%, mindestens 97%, mindestens 98%, mindestens 99%, aber weniger als 100% Sequenzidentität mit der alpha-Amylase von SEQ ID NO: 1 aufweist und die alpha-Amylase die Substitutionen G46A + T47I + G105A + I199F umfasst, wenn SEQ ID NO: 1 zur Nummerierung verwendet wird.

**10.** Verwendung einer alpha-Amylase in einem flüssigen Reinigungsmittel nach Anspruch 9 zum Waschen, bevorzugt bei Temperaturen von 40 °C oder weniger oder bevorzugter bei einer Temperatur von 30 °C oder weniger oder noch bevorzugter bei einer Temperatur von 20 °C oder weniger.

**11.** Verfahren zum Waschen von Textilien, umfassend das Waschen eines Textils mit einer flüssigen Reinigungsmittelzusammensetzung nach irgendeinem der Ansprüche 1-8, bevorzugt bei einer Temperatur von 40 °C oder weniger oder bevorzugter bei einer Temperatur von 30 °C oder weniger oder noch bevorzugter bei einer Temperatur von 20 °C oder weniger.

## Revendications

**1.** Composition de détergent liquide comprenant :

a) au moins 5 % en masse d'eau,
b) au moins 3 % en masse d'un système de tensioactif comprenant de 10 à 100 % en masse du système de tensioactif d'un tensioactif anionique,
c) une alpha-amylase présentant au moins 95 % d'identité de séquence à SEQ ID NO:1 et ladite alpha-amylase comprenant les substitutions G46A+T47I+G105A+I199F lors de l'utilisation de SEQ ID NO:1 pour la numérotation ;

dans laquelle le détergent comprend de plus un agent chélatant ; et dans laquelle l'agent chélatant est HEDP ou un autre agent chélatant présentant une capacité de chélation supérieure ou égale à HEDP dans des conditions identiques, où ledit HEDP ou autre agent chélatant est présent à une concentration d'au moins 0,25 % en masse.

**2.** Détergent liquide selon la revendication 1, dans lequel le système de tensioactif comprend de 0 à 85 % en masse du système de tensioactif d'alkylbenzènesulfonate linéaire (LAS).

**3.** Détergent liquide selon la revendication 2, dans lequel le système de tensioactif comprend de 10 à 75 % en masse du système de tensioactif d'alkylbenzènesulfonate linéaire (LAS).

**4.** Détergent liquide selon la revendication 1, dans lequel le système de tensioactif comprend de 0 à 90 % en masse du système de tensioactif d'éthersulfate d'alcool, de préférence le lauryléthersulfate de sodium (SLES).

**5.** Détergent liquide selon l'une quelconque des revendications ci-dessus, comprenant de plus de 0 à 60 % en masse du système de tensioactif d'un tensioactif non-ionique.

**6.** Détergent liquide selon l'une quelconque des revendications ci-dessus, comprenant de 5 à 75 % en masse du système de tensioactif d'alkylbenzènesulfonate linéaire (LAS), de 5 à 90 % en masse du système de tensioactif de lauryléthersulfate de sodium (SLES) et de 5 à 60 % en masse du système de tensioactif d'un tensioactif non-ionique.

**7.** Détergent liquide selon l'une quelconque des revendications ci-dessus, dans lequel l'alpha-amylase présente la séquence de SEQ ID NO:1 avec les substitutions suivantes :
G46A+T47I+G105A+I199F.

**8.** Détergent liquide selon l'une quelconque des revendications ci-dessus, présentant un pH d'au moins 8.

**9.** Utilisation d'une alpha-amylase dans un détergent liquide selon la revendication 1, ladite amylase présentant au moins 95 %, au moins 96 %, au moins 97 %, au moins 98 %, au moins 99 % mais moins de 100% d'identité de séquence à l'alpha-amylase de SEQ ID NO:1 et ladite alpha-amylase comprenant les substitutions G46A+T47I+G105A+I199F lors de l'utilisation de SEQ ID NO:1 pour la numérotation.

**10.** Utilisation d'une alpha-amylase dans un détergent liquide selon la revendication 9 pour une lessive, de préférence

à des températures de 40°C ou inférieures, ou encore mieux à une température de 30°C ou inférieure ou bien mieux encore à une température de 20°C ou inférieure.

**11.** Procédé de lessive de textiles, comprenant la lessive d'un textile avec une composition de détergent liquide selon l'une quelconque des revendications 1-8, de préférence à une température de 40°C ou inférieure, ou encore mieux à une température de 30°C ou inférieure ou bien mieux encore à une température de 20°C ou inférieure.

Fig. 1

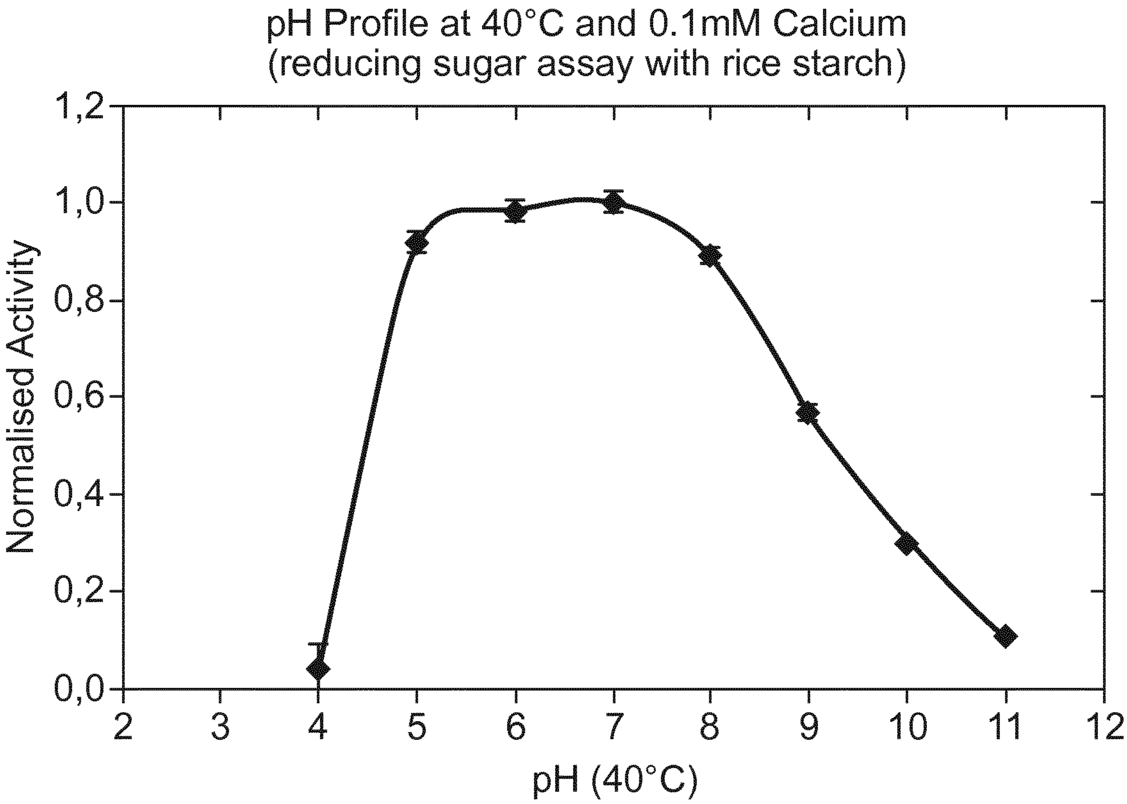
pH Profile at 40°C and 0.1mM Calcium
(reducing sugar assay with rice starch)
Normalised Activity
1,2
1,0
0,8
0,6
0,4
0,2
0,0
2
3
4
5
6
7
8
9
10
11
12
pH (40°C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4537706 A
- WO 2011100410 A
- WO 2011082429 A
- WO 9219709 A
- WO 9219708 A
- WO 9817767 A
- EP 624154 A
- WO 2007087258 A
- WO 2007087244 A
- WO 2007087259 A
- WO 2007087242 A
- WO 2006130575 A
- WO 200503274 A
- WO 200503275 A
- WO 200503276 A
- EP 1876226 A
- WO 2007087257 A
- WO 2007087243 A
- US 4435307 A
- US 5648263 A
- US 5691178 A
- US 5776757 A
- WO 8909259 A
- EP 0495257 A
- EP 0531372 A
- WO 9611262 A
- WO 9629397 A
- WO 9808940 A
- WO 02099091 A
- WO 9407998 A
- EP 0531315 A
- US 5457046 A
- US 5686593 A
- US 5763254 A
- WO 9524471 A
- WO 9812307 A
- DK 9800299 W
- WO 8906279 A
- WO 8906270 A
- WO 9425583 A
- WO 9219729 A
- WO 9820115 A
- WO 9820116 A
- WO 9834946 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 00060063 A
- WO 2007087508 A
- WO 2009109500 A
- WO 9324618 A
- WO 9510602 A
- WO 9815257 A
- US 4106991 A
- US 4661452 A
- GB 1483591 A
- EP 238216 A
- WO 2009087523 A
- WO 2007138054 A
- WO 2006108856 A
- WO 2006113314 A
- EP 1867808 A
- WO 2003040279 A
- US 20090011970 A1
- US 20040171154 A
- WO 9517413 A
- WO 9522625 A
- US 5223409 A
- WO 9206204 A
- WO 0242740 A

**Non-patent literature cited in the description**


- **NEEDLEMAN ; WUNSCH.** *J. Mol. Biol.,* 1970, vol. 48, 443453
- **RICE et al.** EMBOSS: The European Molecular Biology Open Software Suite. *Trends Genet.,* 2000, vol. 16, 276-277
- **SCHWARTZ ; PERRY.** Surface Active Agents. Interscience, 1949
- McCutcheon's Emulsifiers and Detergents. Manufacturing Confectioners Company
- **H. STACHE.** Tenside Taschenbuch. Carl Hauser Verlag, 1981
- **RICE et al.** EMBOSS: The European Molecular Biology Open Software Suite. *Trends Genet.,* 2000, vol. 16, 276277
- **EDGAR.** *Nucleic Acids Research,* 2004, vol. 32, 1792-1797
- **KATOH ; KUMA.** *Nucleic Acids Research,* 2002, vol. 30, 3059-3066
- **KATOH et al.** *Nucleic Acids Research,* 2005, vol. 33, 511-518
- **KATOH ; TOH.** *Bioinformatics,* 2007, vol. 23, 372-374
- **KATOH et al.** *Methods in Molecular Biology,* 2009, vol. 537, 39-64
- **KATOH ; TOH.** *Bioinformatics,* 2010, vol. 26, 1899-1900
- **THOMPSON et al.** *Nucleic Acids Research,* 1994, vol. 22, 4673-4680
- **LINDAHL ; ELOFSSON.** *J. Mol. Biol.,* 2000, vol. 295, 613-615
- **ATSCHUL et al.** *Nucleic Acids Res.,* 1997, vol. 25, 3389-3402
- **JONES.** *J. Mol. Biol.,* 1999, vol. 287, 797-815
- **MCGUFFIN ; JONES.** *Bioinformatics,* 2003, vol. 19, 874-881
- **GOUGH et al.** *J. Mol. Biol.,* 2000, vol. 313, 903-919
- **HOLM ; SANDER.** *Proteins,* 1998, vol. 33, 88-96
- **SHINDYALOV ; BOURNE.** *Protein Engineering,* 1998, vol. 11, 739-747
- **HOLM ; PARK.** *Bioinformatics,* 2000, vol. 16, 566-567
- **H. NEURATH ; R.L. HILL.** The Proteins. Academic Press, 1979
- **CUNNINGHAM ; WELLS.** *Science,* 1989, vol. 244, 1081-1085
- **HILTON et al.** *J. Biol. Chem.,* 1996, vol. 271, 4699-4708
- **DE VOS et al.** *Science,* 1992, vol. 255, 306-312
- **SMITH et al.** *J. Mol. Biol.,* 1992, vol. 224, 899-904
- **WLODAVER et al.** *FEBS Lett.,* 1992, vol. 309, 59-64
- **HODGDON ; KALER.** *Current Opinion in Colloid & Interface Science,* 2007, vol. 12, 121-128
- **M.K. NAGARAJAN et al.** *JAOCS,* September 1984, vol. 61 (9), 1475-1478
- **A. NIELSEN et al.** *Anal. Biochem.,* 2003, vol. 314, 227-234
- **DARTOIS et al.** *Biochemica et Biophysica Acta,* 1993, vol. 1131, 253-360
- Powdered Detergents, Surfactant science series. Marcel Dekker, Inc, vol. 71
- **SCHERER ; DAVIS.** *Proc. Natl. Acad. Sci. USA,* 1979, vol. 76, 4949-4955
- **BARTON et al.** *Nucleic Acids Res.,* 1990, vol. 18, 7349-4966
- **STORICI et al.** *Nature Biotechnol.,* 2001, vol. 19, 773-776
- **KREN et al.** *Nat. Med.,* 1998, vol. 4, 285-290
- **CALISSANO ; MACINO.** *Fungal Genet. Newslett.,* 1996, vol. 43, 15-16
- **TIAN et al.** *Nature,* 2004, vol. 432, 1050-1054
- **REIDHAAR-OLSON ; SAUER.** *Science,* 1988, vol. 241, 53-57
- **BOWIE ; SAUER.** *Proc. Natl. Acad. Sci. USA,* 1989, vol. 86, 2152-2156
- **LOWMAN et al.** *Biochemistry,* 1991, vol. 30, 10832-10837
- **DERBYSHIRE et al.** *Gene,* 1986, vol. 46, 145
- **NER et al.** *DNA,* 1988, vol. 7, 127
- **NESS et al.** *Nature Biotechnology,* 1999, vol. 17, 893-896
- **COOPER et al.** *EMBO J.,* 1993, vol. 12, 2575-2583
- **DAWSON et al.** *Science,* 1994, vol. 266, 776-779
- **MARTIN et al.** *J. Ind. Microbiol. Biotechnol.,* 2003, vol. 3, 568-576
- **SVETINA et al.** *J. Biotechnol.,* 2000, vol. 76, 245-251
- **RASMUSSEN-WILSON et al.** *Appl. Environ. Microbiol.,* 1997, vol. 63, 3488-3493
- **WARD et al.** *Biotechnology,* 1995, vol. 13, 498-503
- **CONTRERAS et al.** *Biotechnology,* 1991, vol. 9, 378-381
- **EATON et al.** *Biochemistry,* 1986, vol. 25, 505-512
- **COLLINS-RACIE et al.** *Biotechnology,* 1995, vol. 13, 982-987
- **CARTER et al.** *Proteins: Structure, Function, and Genetics,* 1989, vol. 6, 240-248
- **STEVENS.** *Drug Discovery World,* 2003, vol. 4, 35-48
- **AD NIELSEN ; CC FUGLSANG ; P WESTH.** *Analytical Biochemistry,* 2003, vol. 314, 227-234

- **T WISEMAN ; S WILLISTON ; JF BRANDTS ; L-N LIN.** *Analytical Biochemistry,* 1989, vol. 179, 131-137
- **M.K.NAGARAJAN et al.** *JAOCS,* September 1984, vol. 61 (9), 1475-1478